# EUROPEAN PATENT APPLICATION

(11) **EP 4 516 937 A1**
(43) Date of publication of application: **05.03.2025**
(21) Application number: 23796451.5
(22) Date of filing: 26.04.2023
(51) Int. Cl.: C21D 8/12, B23K 26/142, B23K 26/16, B23K 26/36, H01F 1/16

(54) **LASER PROCESSING DEVICE AND LASER PROCESSING METHOD**

(30) Priority: 26.04.2022 JP 2022072687
(71) Applicant: NIPPON STEEL CORPORATION, Chiyoda-ku Tokyo 100-8071 (JP)
(72) Inventor: YAMADA, Yoshihiro, Tokyo 100-8071 (JP)
(74) Representative: Vossius & Partner Patentanwälte Rechtsanwälte mbB
(86) International application number: PCT/JP2023/016554
(87) International publication number: WO 2023/210715

(57) **Abstract**

This laser processing device includes: a laser light source unit that irradiates, with a laser light, the surface of a steel sheet being conveyed in a predetermined conveyance direction; a gas injection unit that injects a first gas in parallel with the optical axis direction of the laser light toward the irradiation site of the laser light; a dust collection mechanism unit that is provided at either an upstream side or a downstream side of the irradiation site in the conveyance direction and that collects laser spatter generated from the irradiation site via a dust collection port; and a gas supply unit that is disposed at an opposite side of the laser light source unit from the dust collection mechanism unit in the conveyance direction, and that supplies a second gas between the gas supply unit and the steel sheet.

## Description

### Technical Field

The present disclosure relates to a laser processing device and a laser processing method.

### Background Art

In the related art, in the iron and steel industry, processes of processing a groove or the like on a surface of a steel sheet by irradiating, with a laser light, the surface of a steel sheet conveyed in a predetermined direction are known. For example, Japanese Patent Application Laid-Open (JP-A) Nos. 2017-122264 and 2017-125250 disclose, for magnetic domain control processing of an oriented magnetic steel sheet, technologies in which a plurality of laser processing parts including a laser light source unit are arranged along a sheet width direction of a steel sheet. In JP-A Nos. 2017-122264 and 2017-125250, a processed groove extending in the sheet width direction is formed in a surface of a steel sheet by irradiation with a laser light.

Dust called laser spatter is generated from an irradiation site (that is, an irradiation position) of a laser light on a surface of a steel sheet. If the generated laser spatter adheres to the surface of the steel sheet, performance of the steel sheet may be adversely affected. Therefore, technologies for removing generated laser spatter around a steel sheet have been proposed.

For example, Japanese Patent Application Laid-Open (JP-A) No. 2019-511629 discloses a device including laser irradiation equipment for forming a groove in a surface of a steel sheet, an air knife that injects air to an irradiation site of a laser light, and a dust collection hood for suctioning and removing fumes and molten iron. The air knife in JP-A No. 2019-511629 removes the molten iron remaining inside the groove formed in the surface of the steel sheet.

Korean Patent Unexamined Publication No. 170011860 and Korean Patent Publication No. 001626601 disclose laser processing devices including an air knife that generates a discharge jet to blow off a molten substance inside a groove which is a processed portion of a surface of a steel sheet. The discharge jet of the air knife, that is, the flow of injected air, in JP-A No. 2019-511629, Korean Patent Unexamined Publication No. 170011860, and Korean Patent Publication No. 001626601 reaches the groove at an irradiation site of a laser light in the surface of the steel sheet.

Japanese Patent Application Laid-Open (JP-A) Nos. S58-187290, 2020-138226, and 2020-138227 and CN202226886U disclose laser processing devices including laser irradiation equipment, a dust collection mechanism unit that suctions laser spatter, and an air nozzle through which air is injected toward an irradiation site of a laser light. Discharge jets of the air nozzle in JP-A Nos. S58-187290, 2020-138226, and 2020-138227, and CN202226886U are injected along an axis different from an optical axis of the laser light, that is, in a direction intersecting the optical axis.

In JP-A Nos. S58-187290, 2020-138226, and 2020-138227, and CN202226886U, the discharge jets of the air nozzle guide laser spatter to a dust collection mechanism unit, so that it is possible to prevent the laser spatter from adhering to a laser light source unit.

### Citation List

### Patent Literature

Patent Literature 1: JP-A No. 2017-122264
Patent Literature 2: JP-A No. 2017-125250
Patent Literature 3: JP-A No. 2019-511629
Patent Literature 4: Korean Patent Unexamined Publication No. 170011860
Patent Literature 5: Korean Patent Publication No. 001626601
Patent Literature 6: JP-A No. S58-187290
Patent Literature 7: JP-A No. 2020-138226
Patent Literature 8: JP-A No. 2020-138227
Patent Literature 9: CN202226886U

### SUMMARY OF INVENTION

### Technical Problem

Here, in consideration of the next Top Runner regulations for industrial machines and the like, it is necessary to further reduce the iron loss in the magnetic domain control processing of the oriented magnetic steel sheet as in JP-A Nos. 2017-122264 and 2017-125250. Therefore, there is a demand for further increasing the laser power of emitted laser lights, for example, increasing the laser power to about 1 to 3 kw. It is estimated that this demand would result in an increase in the amount of generated laser spatter. In order to cope with the increase in laser spatter, further improvement in dust collection efficiency is required.

However, as a result of verifying a dust collecting device disclosed in JP-A No. 2019-511629, the present disclosers have found that dust collection efficiency of laser spatter is not sufficient. It has also been found that maintenance of the laser irradiation equipment demands time and effort because the laser spatter that has not been removed in a space around the steel sheet adheres to the laser irradiation equipment.

In addition, in a case where laser spatter is blown off from the irradiation site by air injected from the air knifes as in JP-A No. 2019-511629, Korean Patent Unexamined Publication No. 170011860, and Korean Patent Publication No. 001626601, an air flow for dust collection is disturbed, and as a result, the blown laser spatter adheres to the laser processing device. As a result of intensive studies, the present disclosers have found that generation of an air flow which is strong to the extent that laser spatter remaining in a groove formed in a surface of a steel sheet can be scraped out, like with the air knife, is contrarily one cause of a reduction in dust collection efficiency of laser spatter.

The present disclosers have also studied a case in which laser spatter is guided to the dust collection mechanism unit by air injected from an air nozzle, as in JP-A Nos. S58-187290, 2020-138226, and 2020-138227 and CN202226886U, instead of the air knife. As a result, it has been found that, when the injected air flows in a direction different from an optical axis of the laser light, laser spatter is likely to adhere to the laser processing device.

Further, the present disclosers have also studied a mounting position of a dust collection mechanism unit that suctions laser spatter. In JP-A No. 2019-511629, laser spatter is suctioned by two dust collection hoods arranged in front of and behind the irradiation site of a laser light. That is, the two dust collection hoods are arranged at both of an upstream side and a downstream side across the laser light source unit in a conveyance direction of the steel sheet.

The present disclosers analyzed, by simulation, the air flow in the vicinity of the irradiation site of the laser light in a case in which two dust collection hoods are used as the dust collection mechanism unit. As a result, it has been found that suction by the two dust collection hoods contrarily causes a blank portion of the air flow, that is, a stagnation region of a flow, to be generated in the vicinity of the irradiation site of the laser light between the two dust collection hoods. It has been found that, in the case in which two dust collection hoods are used, the suction force of the dust collection mechanism unit becomes unstable due to the stagnation region, and thus the dust collection efficiency of laser spatter decreases.

In order to curb the generation of the stagnation region in the vicinity of the irradiation site of the laser light, a method of disposing the dust collection mechanism unit at only one side of the upstream side and the downstream side can be considered. However, in the case in which a plurality of laser light source units are arranged in the sheet width direction as in JP-A Nos. 2017-122264 and 2017-125250, in order to reliably collect laser spatter by the dust collection mechanism unit disposed only at one of the upstream side and the downstream side, it is necessary to increase the suction amount of the dust collection mechanism unit compared with in the case in which the dust collection mechanism units are arranged at both the upstream side and the downstream side.

However, in a case in which the plurality of laser light source units are arranged in the sheet width direction, it has been found that, when the suction amount of the dust collection mechanism unit is increased, a stagnation region is likely to be generated in the sheet width direction, and as a result, the suction force becomes more unstable. In other words, it has been found that the suction force tends to be biased in the sheet width direction, and an effect of the biased suction force on the laser spatter collection increases.

The disclosure has been made in view of the above description, and provides a laser processing device capable of enhancing dust collection efficiency of laser spatter and preventing adhesion of laser spatter in the sheet width direction.

### Solution to Problem

A laser processing device according to the disclosure includes: a laser light source unit that irradiates, with a laser light, a surface of a steel sheet being conveyed in a predetermined conveyance direction; a gas injection unit that injects a first gas in parallel with an optical axis direction of the laser light toward an irradiation site of the laser light; a dust collection mechanism unit that is provided at either an upstream side or a downstream side of the irradiation site in the conveyance direction and that collects laser spatter generated from the irradiation site via a dust collection port; and a gas supply unit that is disposed at an opposite side of the laser light source unit from the dust collection mechanism unit in the conveyance direction, and that supplies a second gas between the gas supply unit and the steel sheet.

A laser processing method according to the disclosure includes: irradiating, with a laser light, a surface of a steel sheet being conveyed in a predetermined conveyance direction, using a laser light source unit; stirring up, from the surface of the steel sheet, laser spatter generated from an irradiation site by injecting a first gas in parallel with an optical axis direction of the laser light toward the irradiation site of the laser light, using a gas injection unit; collecting the laser spatter via a dust collection port of a dust collection mechanism unit provided at either an upstream side or a downstream side of the irradiation site in the conveyance direction; and boosting a suction flow of the laser spatter toward the dust collection port by supplying a second gas between a gas supply unit and the steel sheet using a gas supply unit disposed at an opposite side of the laser light source unit from the dust collection mechanism unit in the conveyance direction.

According to the disclosure, dust collection efficiency of laser spatter can be enhanced, and adhesion of laser spatter can be prevented in the sheet width direction.

### BRIEF DESCRIPTION OF DRAWINGS

Fig. 1A is a plan view illustrating a laser processing device according to a first embodiment of the disclosure.
Fig. 1B is a cross-sectional view along line 1B-1B in Fig. 1A.
Fig. 2 is a plan view illustrating a laser processing device according to a second embodiment of the disclosure.
Fig. 3A is a plan view illustrating a laser processing device according to a third embodiment of the disclosure.
Fig. 3B is a cross-sectional view illustrating the laser processing device according to the third embodiment of the disclosure.
Fig. 4 is a plan view illustrating a laser processing device according to a fourth embodiment of the disclosure.
Fig. 5 is a plan view illustrating a laser processing device according to a fifth embodiment of the disclosure.
Fig. 6A is a plan view illustrating a laser processing device according to a sixth embodiment of the disclosure.
Fig. 6B is a cross-sectional view illustrating the laser processing device according to the sixth embodiment of the disclosure.
Fig. 7A is a plan view illustrating a laser processing device according to a first comparative example.
Fig. 7B is a cross-sectional view illustrating the laser processing device according to the first comparative example.
Fig. 8 is a plan view illustrating a laser processing device according to a second comparative example.
Fig. 9A is a plan view illustrating a laser processing device according to a third comparative example.
Fig. 9B is a cross-sectional view illustrating the laser processing device according to the third comparative example.
Fig. 10 is a side view schematically illustrating a partially picked-out part of movement of dry air and movement of laser spatter of a laser processing device according to a fourth comparative example.
Fig. 11 is a side view schematically illustrating a partially picked-out part of movement of dry air and movement of laser spatter of a laser processing device according to a fifth comparative example.
Fig. 12 is a side view schematically illustrating a partially picked-out part of movement of dry air and movement of laser spatter of a laser processing device according to a sixth comparative example.
Fig. 13 is a side view schematically illustrating a partially picked-out part of movement of dry air and movement of laser spatter of a laser processing device according to a seventh comparative example.
Fig. 14 is a plan view illustrating a laser processing device according to a modification example of the disclosure.

### DESCRIPTION OF EMBODIMENTS

Hereinafter, embodiments of the disclosure will be described with reference to first to sixth embodiments. In the following description of the drawings, the same reference numerals or similar reference numerals are assigned to the same portions and similar portions. However, the drawings provide schematic illustrations, and thus relationships between thicknesses and planar dimensions, ratios of thicknesses of individual devices and individual members, or the like are different from actual ones. Hence, specific thicknesses or planar dimensions need to be determined in consideration of the following description. The drawings also include portions having different dimensional relationships and ratios from each other. Unless otherwise specified in the specification, the number of each component of the disclosure is not limited to one, and a plurality of components may be present.

### -First Embodiment-

### <Laser Processing Device>

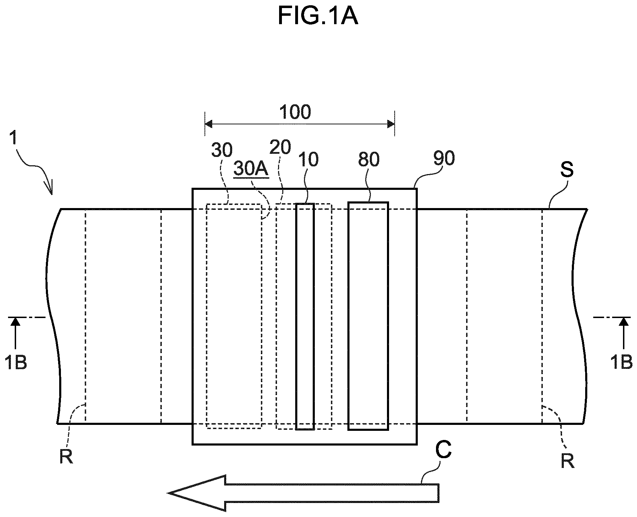

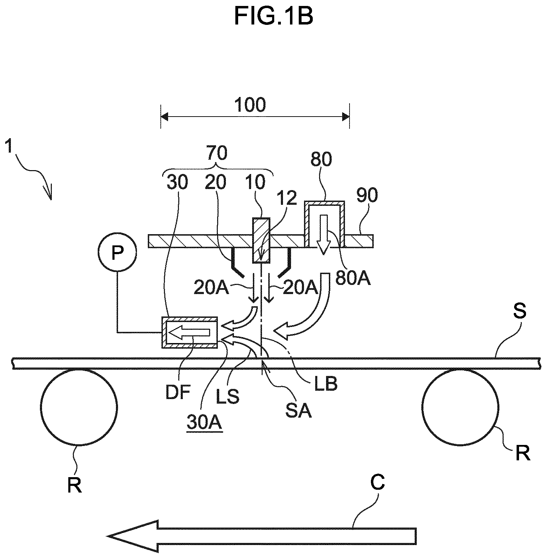

As illustrated in Figs. 1A and 1B, a laser processing device 1 according to the first embodiment includes a laser light source unit 10, gas injection units 20, a dust collection mechanism unit 30, a gas supply unit 80, and a ceiling plate 90. Operating states of the laser light source unit 10, the gas injection units 20, the dust collection mechanism unit 30, and the gas supply unit 80 are controlled by, for example, various computers (not illustrated) such as a process computer that integrally controls manufacturing steps of a steel sheet.

### (Steel sheet)

A processing target of the laser processing device 1 according to the first embodiment is a steel sheet S. A type of steel sheet S is not particularly limited, and various known steel sheets S such as an oriented magnetic steel sheet can be employed. In addition, a type of processing using a laser light is not limited. The laser processing device 1 according to the first embodiment can be applied to various types of known processing using a laser light, which are performed at any timing in a manufacturing step for manufacturing various types of steel sheets S.

The steel sheet S is conveyed by conveyance rolls R provided at predetermined intervals in a conveyance direction C. The conveyance direction C is set in advance. The laser processing device 1 according to the first embodiment is mounted between the adjacent conveyance rolls R. In the disclosure, a mounting position of the laser processing device is not limited to the position between adjacent conveyance rolls.

Although not illustrated, in the disclosure, the laser processing device may be mounted to face a roll surface of a steel sheet support roll that changes the conveyance direction C of the steel sheet S. For example, the steel sheet support roll can change, to an oblique direction, a path line of the steel sheet S being conveyed in a horizontal direction. The steel sheet support roll can also change, into an obliquely downward direction, a path line of the steel sheet S being conveyed obliquely upward. In the disclosure, the laser processing device can be mounted at any position on a conveyance line on which the steel sheet S is conveyed.

### (Steel Strip Coil)

As the steel sheet S of the first embodiment, a steel strip coil is used. In the disclosure, the steel sheet is not limited to the steel strip coil, and a cut plate cut out in advance from a steel strip coil or the like may be employed as the steel sheet, for example. The steel strip coil can be produced by winding a long steel strip having a certain width.

When a surface of the steel sheet S is subjected to laser processing, one end located on a center side of a wound steel strip coil is rotatably supported on one end side of processing equipment in a longitudinal direction, and the other end located on an outer side of the steel strip coil is connected to the other end side of the processing equipment in the longitudinal direction. Then, the other end of the steel strip coil is drawn and wound at a substantially constant speed toward the other end side of the processing equipment. In the first embodiment, performing laser processing on the surface of the steel sheet S of the steel strip coil by passing, through the laser processing device 1 mounted on the processing equipment, the steel strip coil being wound is also referred to as "passing".

### (Continuous Processing)

In the first embodiment, the laser processing performed during the passing of the steel sheet S of the steel strip coil is also referred to as "continuous processing". On the other hand, performing the laser processing on the surface of the cut plate without drawing the steel strip coil is referred to as "batch processing". In the laser processing of the batch processing, the steel sheet is subjected to the laser processing on cut plates one by one in a state in which, for example, a rectangular cut plate is fixed on a support table for processing or in a state in which the cut plate is supported on a conveyance line. Regarding each of the cut plates, a fixing operation to the support table or a loading or collecting operation on or from the conveyance line is also performed. Therefore, in the batch processing, costs of grooving processing are easily increased, and as a result, productivity relatively declines.

On the other hand, in the laser processing of the continuous processing as in the first embodiment, it is possible to perform substantially uniform grooving over substantially the entire length of the steel strip coil in a relatively short time after winding the steel strip coil only by continuously and repeatedly performing the processing in a sheet width direction, such as scanning of a laser light LB. In addition, there is no need to perform an operation of moving the laser processing device 1 over the entire length of the steel strip coil, that is, an operation of moving the laser processing device 1 in the conveyance direction C. Therefore, in the continuous processing, costs of the grooving processing can be reduced as compared with the batch processing, and as a result, the productivity can be improved.

### (Laser Light Source Unit)

The laser light source unit 10 irradiates, with the laser light LB having a predetermined wavelength, the surface of the steel sheet S being conveyed. The laser light source unit 10 has a laser light source (not illustrated) for emitting the laser light LB having a wavelength and intensity required to realize focused processing, and an optical system (not illustrated) for guiding the laser light LB emitted from the laser light source to the surface of the steel sheet S.

The laser light source is not particularly limited, and various laser light sources such as various solid-state laser light sources, gas laser light sources, and semiconductor laser light sources can be used. An optical system is not particularly limited, and various optical systems for guiding the laser light LB to the surface of the steel sheet S can be used.

The mounting position of the laser light source unit 10 described above is not particularly limited. For example, as schematically illustrated in Fig. 1B, it is preferable that the laser light source unit is provided above the steel sheet S in a vertical direction such that an irradiation optical axis of the laser light LB is substantially perpendicular to the surface of the steel sheet S.

### (Gas Injection Units)

As illustrated in Figs. 1A and 1B, the gas injection units 20 are arranged at both a position at an upstream side in the conveyance direction C and a position at a downstream side in the conveyance direction C in an emission portion 12 of the laser light LB of the laser light source unit 10. In the first embodiment, the gas injection unit 20 is an air nozzle that injects a first gas 20A in parallel with an optical axis direction of the laser light LB toward am irradiation site SA of the laser light LB. The gas injection unit 20 injects, as an example of the first gas 20A, dry air supplied from an air supply pipe (not illustrated), toward the irradiation site SA of the laser light LB on the surface of the steel sheet S.

The gas injection unit 20 is disposed to cause the dry air which is the injected the first gas 20A to overlap the laser light LB over the entire scanning width of the laser light LB in a sheet width direction (that is, a vertical direction in Fig. 1A) of the steel sheet S. A discharge jet of the first gas 20A injected from the gas injection unit 20 curbs adhesion of laser spatter LS to the emission portion 12. A portion of the surface of the steel sheet S increases in temperature and expands in volume due to energy of the laser light LB, thereby popping as laser spatter LS from the surface of the steel sheet S. The popped laser spatter LS is collected into the dust collection mechanism unit 30 along with a flow of a suction airflow DF by the dust collection mechanism unit 30.

In the laser processing device 1 according to the first embodiment, the gas injection unit 20 that injects dry air having a flow velocity lower than that of an air knife is used instead of using the air knife having a flow velocity as suitable as to scrape the laser spatter LS from an inside of a groove in the surface of the steel sheet S. Consequently, unlike the air knife, the laser spatter LS can be stirred up from the surface of the steel sheet S and superimposed on an air flow formed by the dust collection mechanism unit 30 without disturbing the air flow for collecting dust.

In other words, in the laser processing device 1 according to the first embodiment, dry air is injected from the gas injection unit 20 toward the irradiation site SA of the laser light LB to the extent that the laser spatter LS can be stirred up from the surface of the steel sheet S. Therefore, in the disclosure, not all of the dry air needs to reach the irradiation site SA. Alternatively, only a part of the dry air may reach the irradiation site SA. As a result, it is possible to prevent the stirred-up laser spatter LS from adhering to the laser processing device, particularly to the emission portion 12.

On the other hand, dry air injected by the air knife reaches a groove and blows off spatter inside the groove. Therefore, the blown laser spatter LS adheres to the laser processing device including the emission portion 12.

Mounting positions of the gas injection units 20 are not particularly defined as long as the mounting positions are positions where the dry air can be injected to the surface of the steel sheet S. However, as illustrated in Figs. 1A and 1B, the gas injection units 20 are preferably provided immediately above the steel sheet S. The gas injection unit 20 is more preferably provided in parallel with the optical axis direction of the laser light LB such that a nozzle main axis direction of the gas injection unit 20, in other words, a traveling direction of the dry air being injected, is substantially coaxial with the optical axis direction of the laser light LB in the laser light source unit 10. The dry air illustrated in Fig. 1B is injected toward the surface of the steel sheet S in parallel with the optical axis direction of the laser light LB to be substantially orthogonal to the surface of the steel sheet S.

Here, in the first embodiment, an inject amount of the dry air injected from the gas injection unit 20 is preferably set to be equal to or smaller than a suction amount of the dust collection mechanism unit 30. Since the injection amount of dry air from the gas injection unit 20 is equal to or smaller than the suction amount of the dust collection mechanism unit 30, it is possible to more reliably curb disturbing of the air flow for suctioning the laser spatter LS due to the dry air while the laser spatter LS is stirred up from the surface of the steel sheet S. Therefore, the dust collection efficiency of laser spatter LS can be reliably improved. It is more preferable that the injection amount of dry air injected from the gas injection unit 20 is more finely controlled. In the disclosure, the injection amount of dry air is not limited to an amount equal to or smaller than the suction amount of the dust collection mechanism unit 30, and can be randomly changed.

A discharge flow velocity of dry air injected from the gas injection unit 20 is preferably set to a value equal to or lower than a suction flow velocity obtained by the dust collection mechanism unit 30. Since the discharge flow velocity of dry air is a discharge flow velocity equal to or smaller than the suction flow velocity obtained by the dust collection mechanism unit 30, the dust collection efficiency obtained by the dust collection mechanism unit 30 can be further improved. In the disclosure, the discharge flow velocity of dry air is not limited to a flow velocity equal to or lower than the suction flow velocity of the dust collection mechanism unit 30, and can be randomly changed.

A specific example of the gas injection unit 20 that realizes injection of dry air is not particularly limited, and it is possible to use various known air injecting nozzles. Examples of the air injecting nozzle include a slit nozzle.

The first gas 20A injected from the gas injection unit 20 is not limited to the dry air as described above, and may be nitrogen, argon, carbon dioxide, helium, or the like.

In the first embodiment, the gas injection unit 20 is set so that a flow rate of the first gas 20A and an opening area of the gas injection unit 20 satisfy the following Relational Expression 1.

### (Relational Expression 1)

In a case in which the opening area of the gas injection unit 20 has the unit of square meters (m²), and the flow rate of the first gas 20Ahas the unit of cubic meters per second (m³/s), the following expression is satisfied.

### (Opening Area of Gas Injection Unit 20) = K · (Flow rate of First Gas 20A)

Here, K in Relational Expression 1 represents a constant having a dimension (s/m) of a reciprocal of a velocity. The value of the constant K can be set within a range of, for example, from 0.01 to 0.5.

That is, the upper limit value of the opening area of the gas injection unit 20 can be set based on a product of the constant K and the flow rate of the first gas 20A. By setting the gas injection unit 20 to satisfy Relational Expression 1, the dust collection efficiency of the laser spatter LS can be further enhanced, and the adhesion of the laser spatter LS can be further prevented in the sheet width direction.

In a case in which the constant K is less than 0.01, the discharge flow velocity of the first gas 20A from the gas injection unit 20 becomes too high similarly to an air knife, and as a result, the air flow for dust collection is likely to be disturbed. In a case in which the constant K exceeds 0.5, a mounting space of the gas injection unit 20 becomes too large, and as a result, there is a concern that the gas injection unit 20 will interfere with another piece of equipment. In the disclosure, it is not essential for the opening area of the gas injection unit to satisfy Relational Expression 1. In the disclosure, the opening area of the gas injection unit can be randomly set.

### (Dust Collection Mechanism Unit)

The dust collection mechanism unit 30 is a mechanism that collects the laser spatter LS floating in the vicinity of the irradiation site SA of the laser light LB while curbing adhesion of the laser spatter LS to the emission portion 12 due to the injection of dry air from the gas injection unit 20. The dust collection mechanism unit 30 has the external appearance with, for example, a dust collection hood or the like having a dust collection port 30A for collecting the laser spatter LS. The dust collection mechanism unit 30 includes a dust collection channel (not illustrated) for suctioning the laser spatter LS and a suction pump P provided on the dust collection channel.

The dust collection mechanism unit 30 is configured to suction the atmosphere around the dust collection port 30A by a predetermined suction amount. The dust collection mechanism unit 30 collects the laser spatter LS generated from the irradiation site SA of the laser light LB via the dust collection port 30A by a suction operation. The specific configuration of the dust collection mechanism unit 30 is not particularly limited, and various known mechanisms can be used, if appropriate. The number of the dust collection mechanism units 30 is not limited to one, and a plurality of dust collection mechanism units 30 may be provided.

As schematically illustrated in Figs. 1A and 1B, the dust collection mechanism unit 30 is provided at either the upstream side of the irradiation site SA of the laser light LB or the downstream side of the irradiation site SA of the laser light LB in the conveyance direction C of the steel sheet S. That is, the dust collection mechanism unit 30 is not provided at both the upstream side and the downstream side of the irradiation site SA of the laser light LB. By providing the dust collection mechanism unit 30 only at the upstream side or only at the downstream side of the irradiation site SA of the laser light LB, it is possible to prevent the air flow for suctioning the laser spatter LS from stagnating in the vicinity of the irradiation site SA of the laser light LB, and it is possible to reliably collect the laser spatter LS.

If the dust collection mechanism unit 30 is disposed at either the upstream side or the downstream side, the dust collection mechanism unit 30 and members included in the laser processing device 1 interfere with each other, and thus it may be difficult to secure a mounting space of the dust collection mechanism unit 30. Here, in the first embodiment, the dust collection mechanism unit 30 can be disposed at either the upstream side or the downstream side. Hence, for example, even if it is difficult to secure a space for mounting the dust collection mechanism unit 30 on one side, the mounting space can be set on the other side. That is, it is easy to flexibly change a mounting position of the dust collection mechanism unit 30.

As schematically illustrated in Fig. 1B, it is more preferable that the dust collection mechanism unit 30 is provided at only downstream side of the irradiation site SA of the laser light LB. Since the steel sheet S which is a processing target is conveyed in the conveyance direction C, an air flow (that is, an accompanying flow) from the upstream side to the downstream side in the conveyance direction C is generated. Therefore, since the dust collection mechanism unit 30 is provided at only downstream side of the irradiation site SA of the laser light LB, the accompanying flow can be utilized, and as a result, the laser spatter LS can be more reliably collected.

The suction amount obtained by the dust collection mechanism unit 30 is preferably equal to or larger than the injection amount of dry air from the gas injection unit 20. Consequently, the air flow around the irradiation site SA of the laser light LB can be more reliably prevented from stagnating, and it is possible to more reliably collect the laser spatter LS. In the disclosure, the suction amount obtained by the dust collection mechanism unit 30 is not limited to a suction amount equal to or larger than the injection amount of the first gas 20A from the gas injection unit 20, and can be randomly changed.

The suction flow velocity obtained by the dust collection mechanism unit 30 is, for example, preferably from 15 m/s to 50 m/s, and more preferably from 20 m/s to 30 m/s. When the suction flow velocity is from 15 m/s to 50 m/s, the air flow around the irradiation site SA of the laser light LB is not disturbed. As a result, the laser spatter LS can be more reliably collected.

In a case in which the suction flow velocity is lower than 15 m/s, a spatter suction ratio is lowered. In a case in which the suction flow velocity exceeds 50 m/s, power consumption increases. In the case in which the suction flow velocity exceeds 50 m/s, negative pressure increases due to suction, and thus pressure vibration occurs. Hence, there is a concern that problems in stability of the passing and stability of a laser device may arise. In the disclosure, the suction flow velocity obtained by the dust collection mechanism unit 30 is not limited in a range of from 15 m/s to 50 m/s, and can be randomly changed.

### (Laser Processing Parts and Laser Processing Set)

In the first embodiment, one laser light source unit 10, one gas injection unit 20, and one dust collection mechanism unit 30 corresponding to each other constitute one "laser processing part". A plurality of laser processing parts 70 arranged in the sheet width direction of the steel sheet S constitute one "laser processing set". The number of laser processing sets 100 disposed in the sheet width direction of the steel sheet S is one.

In the disclosure, the number of laser processing parts 70 constituting one laser processing set 100 may be one or more. In the disclosure, two or more laser processing sets 100 may be arranged in a plurality of stages in the conveyance direction C with respect to one steel sheet S.

### (Gas Supply Unit)

The gas supply unit 80 is disposed at an opposite side of the laser light source unit 10 from the dust collection mechanism unit 30 in the conveyance direction C. That is, the gas supply unit 80 is provided at either the upstream side or the downstream side of the irradiation site SA in the conveyance direction C. As illustrated in Fig. 1B, the gas supply unit 80 is positioned at an upper side relative to the dust collection port 30A of the dust collection mechanism unit 30. In the disclosure, a configuration in which the gas supply unit is positioned at a height equal to or lower than a height of the dust collection port 30A of the dust collection mechanism unit is not excluded.

The gas supply unit 80 supplies a second gas 80A between the gas supply unit 80 and the steel sheet S. The supply of the second gas 80A boosts generation of a suction flow of the laser spatter LS to the dust collection mechanism unit 30. In the disclosure, the "laser processing part" may further include the gas supply unit, in addition to the laser light source unit, the gas injection unit, and the dust collection mechanism unit. That is, the "laser processing set" may include the gas supply unit.

The second gas 80A is, for example, dry air. In the disclosure, the second gas 80A is not limited to dry air, and may be nitrogen, argon, carbon dioxide, helium, or the like. A specific example of the gas supply unit 80 is not particularly limited, and various known air injecting nozzles can be used. Examples of the air injecting nozzle include a slit nozzle.

In the first embodiment, the gas supply unit 80 injects the second gas 80A. In the first embodiment, a discharge flow velocity of the second gas 80A is preferably 5 m/s or lower from the viewpoint of improving the dust collection efficiency. In the disclosure, a configuration in which the discharge flow velocity of the second gas 80A exceeds 5 m/s and a method of injecting the second gas 80A at a flow velocity exceeding 5 m/s are not excluded.

In the first embodiment, the gas supply unit 80 is set so that a flow rate of the second gas 80A and an opening area of the gas supply unit 80 satisfy the following Relational Expression 2.

### (Relational Expression 2)

In a case in which the opening area of the gas supply unit 80 has the unit of square meters (m²), and the flow rate of the second gas 80A has the unit of cubic meters per second (m³/s), the following expression is satisfied.

### (Opening Area of Gas Supply Unit 80) = M · (Flow rate of Second Gas 80A)

Here, M in Relational Expression 2 represents a constant having a dimension (s/m) of a reciprocal of a velocity. The value of the constant M can be set within a range of, for example, from 0.2 to 10.

That is, the lower limit value of the opening area of the gas supply unit 80 can be set based on a product of the constant M and the flow rate of the second gas 80A. By setting the gas supply unit 80 to satisfy Relational Expression 2, the dust collection efficiency of the laser spatter LS can be further enhanced, and the adhesion of the laser spatter LS can be further prevented in the sheet width direction.

In a case in which the constant M is less than 0.2, the discharge flow velocity of the second gas 80A from the gas supply unit 80 becomes too high, and as a result, the air flow for dust collection is likely to be disturbed. In a case in which the constant M exceeds 10, a mounting space of the gas supply unit 80 becomes too large, and as a result, there is a concern that the gas supply unit 80 will interfere with another piece of equipment. In the disclosure, it is not essential for the opening area of the gas supply unit to satisfy Relational Expression 2. In the disclosure, the opening area of the gas supply unit can be randomly set.

In the first embodiment, the case in which both the opening area of the gas injection unit 20 which satisfies Relational Expression 1 and the opening area of the gas supply unit 80 which satisfies Relational Expression 2 are realized has been described as an example, but the disclosure is not limited thereto. In the disclosure, at least one of the opening area of the gas injection unit 20 which satisfies Relational Expression 1 and the opening area of the gas supply unit 80 which satisfies Relational Expression 2 may be realized. Here, both the opening area of the gas injection unit 20 which satisfies Relational Expression 1 and the opening area of the gas supply unit 80 which satisfies Relational Expression 2 are realized, and thereby an effect of improving the dust collection efficiency of the laser spatter LS and an effect of preventing adhesion of the laser spatter LS in the sheet width direction can be further enhanced.

### (Ceiling Plate)

The laser processing set 100 and the gas supply unit 80 are attached to the ceiling plate 90. In the disclosure, the "laser processing part" may include the ceiling plate. That is, the "laser processing set" may include the gas supply unit. As illustrated in Fig. 1B, the ceiling plate 90 partitions a space into a space on the steel sheet S side and a space on an opposite side from the steel sheet S at a position of a height of the emission portion 12 of the laser light source unit 10. That is, the ceiling plate 90 serves as a partition wall that prevents the laser spatter LS from adhering to a portion above the emission portion 12 of the laser light source unit 10.

In the disclosure, the laser processing part may be configured as one unit that can be handled independently of other members in the processing equipment. That is, for example, the laser processing part including one laser light source unit, one gas injection unit, and one dust collection mechanism unit can be integrally supported by a support member such as a frame (not illustrated), and the laser processing part supported by the support member can be detachably provided with respect to the ceiling plate 90.

In the laser processing device 1 according to the first embodiment, it is possible to more efficiently collect the laser spatter LS generated due to the irradiation of the laser light LB, and for example, it is possible to more easily realize the dust collection efficiency of 90% or more. A specific definition of the dust collection efficiency will be described later in "Examples".

As a result of further improving the dust collection efficiency of the laser spatter LS, the laser spatter LS reaching a wall surface of the laser light source unit 10 can also be reduced, and the cleanliness or the convenience of maintenance of the laser light source unit 10 can be further improved. Therefore, in a case in which the laser processing device 1 according to the first embodiment is applied to, for example, magnetic domain control processing of an oriented magnetic steel sheet, the generated laser spatter LS can be reliably collected even in a case in which irradiation power of the laser light LB to be emitted needs to be further increased.

### (Laser Processing Method)

By using the laser processing device 1 according to the first embodiment, a laser processing method according to the first embodiment can be realized. The laser processing method according to the first embodiment is a method of collecting the laser spatter LS which is generated from the irradiation site SA of the laser light LB due to the laser light LB emitted to the surface of the steel sheet S.

In the laser processing method according to the first embodiment, as continuous processing, the surface of the steel sheet S (that is, the moving steel sheet S) being conveyed in the conveyance direction C set in advance is irradiated with the laser light LB from the laser light source unit 10. The dry air is injected from the gas injection unit 20 toward the irradiation site SA of the laser light LB, in parallel with the optical axis direction of the laser light LB. By injecting the dry air, the laser spatter LS generated from the irradiation site SA is stirred up from the surface of the steel sheet S.

The second gas 80A is supplied between the gas supply unit 80 and the steel sheet S by the gas supply unit 80. Supply of the second gas 80A boosts the suction flow of the laser spatter LS toward the dust collection port 30A of the dust collection mechanism unit 30. Then, the laser spatter LS is collected via the dust collection port 30A of the dust collection mechanism unit 30 provided at either the upstream side or the downstream side of the irradiation site SA of the laser light LB in the conveyance direction C of the steel sheet S.

### (Operations and Effects of First Embodiment)

In the first embodiment, since the gas injection unit 20 injects the first gas 20A toward the irradiation site SA, in parallel with the optical axis direction of the laser light LB, adhesion of the laser spatter LS to the laser light source unit 10 can be reduced as compared with a case in which the gas injection unit 20 injects the first gas 20A in a state of intersecting the optical axis direction.

In the first embodiment, since the gas supply unit 80 supplies the second gas between the gas supply unit 80 and the steel sheet S, a stagnation region of the suction flow in the sheet width direction is reduced. That is, generation of a blank portion of a gas flow is curbed by the second gas. Therefore, the generation of the suction flow of the laser spatter LS toward the dust collection port 30A of the dust collection mechanism unit 30 is boosted. As a result, the suction force of the dust collection mechanism unit 30 is stabilized in the sheet width direction, and the dust collection efficiency of the laser spatter LS is enhanced. Therefore, adhesion of the laser spatter LS to the laser light source unit 10 can be reduced. As a result, the dust collection efficiency of the laser spatter LS can be enhanced, and the adhesion of the laser spatter LS to the laser light source unit 10 can be prevented in the sheet width direction.

In the first embodiment, the gas supply unit 80 is positioned at an upper side relative to the dust collection port 30A. In other words, the gas supply unit 80 is separated from the space in the vicinity of the irradiation site SA. Accordingly, in the space in the vicinity of the irradiation site SA, a region where gas including the laser spatter LS can flow can be secured to be wider as compared with a case in which the gas supply unit 80 is disposed in the space in the vicinity of the irradiation site SA. Therefore, it is possible to prevent the suction flow from stagnating in the space in the vicinity of the irradiation site SA.

In the first embodiment, the laser light source unit 10, the gas injection unit 20, a dust collector posterior portion, and the gas supply unit 80 can be integrally moved by the ceiling plate 90 at the time of assembly and maintenance. Therefore, as compared with the case in which the laser light source unit 10, the gas injection unit 20, the dust collector posterior portion, and the gas supply unit 80 are separately moved, a moving operation is facilitated.

### -Second Embodiment-

In the first embodiment, the case in which one laser processing set 100 is configured of one laser processing part 70 has been described as an example, but in the disclosure, one laser processing set 100 may be configured of a plurality of laser processing parts 70 arranged in the sheet width direction.

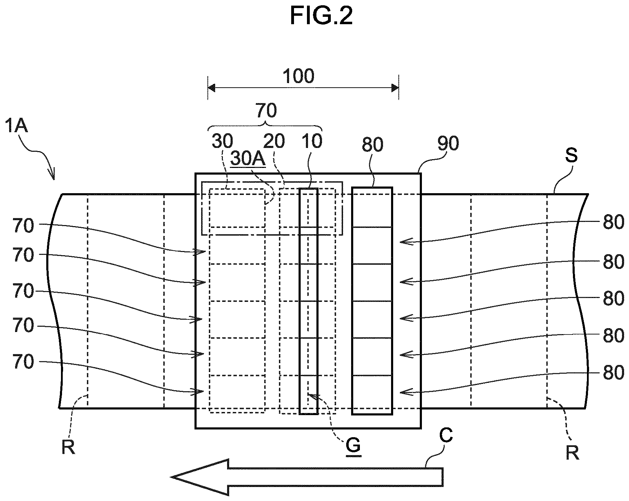

As illustrated in Fig. 2, a laser processing device 1A according to the second embodiment differs from the laser processing device of the first embodiment in that one laser processing set 100 is configured of six laser processing parts 70 arranged in the sheet width direction. Hereinafter, configurations in the second embodiment which are different from those of the first embodiment will be mainly described, and redundant description of configurations similar to those of the first embodiment will be omitted.

In the second embodiment, an arrangement direction of the six laser processing parts 70 is in parallel with the sheet width direction. In the laser processing set 100, a plurality of gas supply units 80 are provided for the plurality of laser processing parts 70, respectively. The plurality of laser processing parts 70 included in the laser processing set 100 are attached to the ceiling plate 90. In Fig. 2, grooves G drawn by respective broken lines are illustrated inside the six laser light source units 10.

### (Operations and Effects of Second Embodiment)

Also in the second embodiment, similarly to the case of the first embodiment, the dust collection efficiency of laser spatter LS can be enhanced, and the adhesion of the laser spatter LS to the laser light source unit 10 can be prevented in the sheet width direction. In the second embodiment, the laser processing set 100 in which the plurality of laser light source units 10 are arranged in the sheet width direction is used.

Here, in a case in which it is necessary to perform grooving with a width over the entire plate width, a necessary processing width can be obtained even with the laser light source units 10 in which a processing width per one laser light source unit is shorter than the plate width, by using the laser processing set 100 in which the plurality of laser light source units 10 are arranged in the sheet width direction. According to the second embodiment, there is no need to use one laser light source unit that is relatively expensive and has a large size, in order to obtain a long processing width.

In the second embodiment, the gas supply unit 80 is provided respectively corresponding to each of the plurality of laser processing parts 70. Here, in a case in which one gas supply unit 80 is provided for all of the plurality of laser processing parts 70, it is necessary to change the shape of one gas supply unit 80 when arrangement positions of the plurality of laser light source units 10 are individually changed on the steel sheet S depending on a shape of a necessary processed groove. Therefore, in the second embodiment, when the arrangement positions of the laser light source units 10 are individually changed, the configuration of the laser processing device can be easily changed if the gas supply unit 80 corresponding to the laser light source unit 10 to be changed is moved together.

In the second embodiment, since the plurality of laser processing parts 70 and the respective gas supply units 80 can be integrally moved by the ceiling plate 90, a plurality of laser processing sets 100 and the gas supply units 80 can be easily moved.

### -Third Embodiment-

In the first embodiment and the second embodiment, the case in which one laser processing set 100 is disposed in the conveyance direction C has been described as an example, but in the disclosure, a plurality of laser processing sets may be arranged in the conveyance direction C.

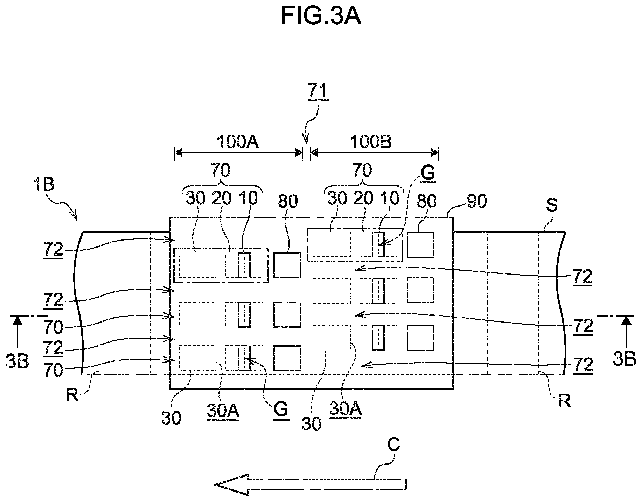

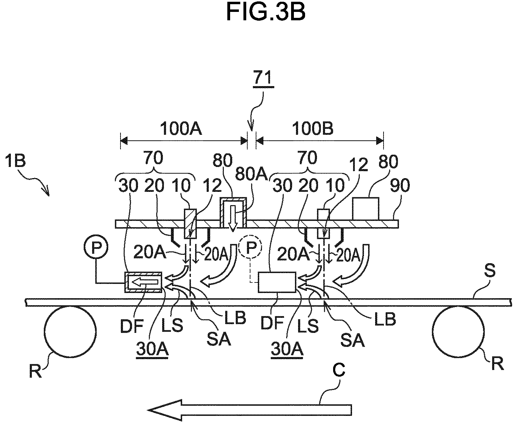

As illustrated in Figs. 3A and 3B, a laser processing device 1B according to the third embodiment differs from the laser processing devices of the first embodiment and the second embodiment in that a first laser processing set 100A and a second laser processing set 100B are arranged in the conveyance direction C in two stages with an interval 71 in the conveyance direction C. Hereinafter, configurations in the third embodiment which are different from those of the first embodiment and the second embodiment will be mainly described, and redundant description of configurations similar to those of the first embodiment and the second embodiment will be omitted.

In the third embodiment, the first laser processing set 100A provided at downstream side (that is, on the left side in Fig. 3A) in the conveyance direction C includes three laser processing parts 70. In the first laser processing set 100A, the dust collection mechanism unit 30 of the first laser processing part 70 and the dust collection mechanism unit 30 of the second laser processing part 70 are separately provided with an interval 72, the first laser processing part 70 and the second laser processing part 70 being adjacent to each other in the sheet width direction. In Fig. 3A, grooves G processed by the laser lights LB from the respective corresponding laser light source units 10 are illustrated by respective broken lines inside three laser light source units 10 of the first laser processing set 100A.

In the first laser processing set 100A, the dust collection mechanism unit 30 of the laser processing part 70 positioned at an end portion in the sheet width direction is provided with the interval 72 from an end portion of the steel sheet S. In the disclosure, at least one interval 72 of the interval 72 between the dust collection mechanism units 30 and the interval 72 between the dust collection mechanism unit 30 and the end portion of the steel sheet S may be formed at one or more positions.

The second laser processing set 100B provided at the upstream side (that is, the right side in Fig. 3A) in the conveyance direction C includes three laser processing parts 70. A third laser processing part 70 included in the second laser processing set 100B is disposed at a position overlapping with the interval 72 between the dust collection mechanism unit 30 of the first laser processing part 70 and the dust collection mechanism unit 30 of the second laser processing part 70 in the first laser processing set 100A. Fig. 3A illustrates grooves G drawn by respective broken lines inside three laser light source units 10 of the second laser processing set 100B. In the disclosure, the third laser processing part 70 disposed at the position overlapping with the interval 72 in the conveyance direction C on at least one of the upstream side or the downstream side of the laser processing set 100 in the conveyance direction C may be provided.

### (Operations and Effects of Third Embodiment)

Also in the third embodiment, similarly to the cases of the first and second embodiments, the dust collection efficiency of laser spatter LS can be enhanced, and the adhesion of the laser spatter LS to the laser light source unit 10 can be prevented in the sheet width direction. In the third embodiment, the interval 72 is formed between the dust collection mechanism units 30 adjacent to each other on the steel sheet S. The interval 72 is formed between the dust collection mechanism unit 30 positioned at an end portion on the steel sheet S in the sheet width direction and an end portion of the steel sheet S. That is, the interval 72 is formed on a lateral side of the dust collection mechanism unit 30. The formed interval 72 serves as a path of a suctionable gas.

Therefore, a volume of gas that can be suctioned by the dust collection mechanism unit 30 can be more increased as compared with the case in which the adjacent dust collection mechanism units 30 are in contact with each other. Alternatively, the volume of gas that can be suctioned by the dust collection mechanism unit 30 can be more increased as compared with the case in which the dust collection mechanism units 30 are present to a position of the end portion of the steel sheet S. Since supply of gas to a space in the vicinity of the irradiation site SA is increased with the interval 72, the stagnation region can be curbed from being formed.

In the third embodiment, the first laser processing set 100 and the second laser processing set 100 are arranged in two stages in the conveyance direction C. The third laser processing part 70 of the second laser processing set 100 provided at the upstream side in the conveyance direction C is disposed at a position overlapping with the interval 72 between the first laser processing part 70 and the second laser processing part 70 in the first laser processing set 100 provided at downstream side.

Therefore, even when a portion on which laser processing is not performed by the first laser processing set 100 is formed at a position on the surface of the steel sheet S which corresponds to the interval 72, laser processing can be performed on a position overlapping with the interval 72 by the second laser processing set 100 provided at the upstream side. That is, the plurality of laser processing parts 70 of each of the laser processing sets arranged in two stages in the conveyance direction C can form the laser processing parts 70 arranged in a state of extending in the sheet width direction while being shifted in the conveyance direction C.

### -Fourth Embodiment-

In the third embodiment, the case in which the plurality of gas supply units 80 are provided for the plurality of laser processing parts 70, respectively, has been described as an example, but in the disclosure, one gas supply unit 80 may be provided for all of the plurality of laser processing parts 70.

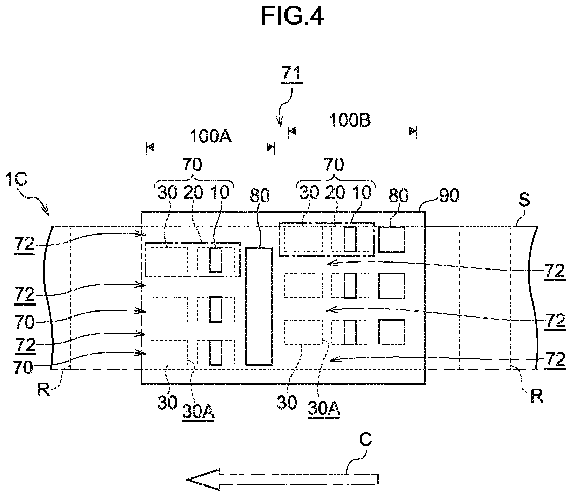

As illustrated in Fig. 4, in a laser processing device 1C according to the fourth embodiment, one gas supply unit 80 is provided for all the three laser processing parts 70 in one laser processing set 100. The configurations of the other members in the fourth embodiment are similar to those of the members having the same names in the third embodiment, and thus the redundant description thereof will be omitted.

### (Operations and Effects of Fourth Embodiment)

Also in the fourth embodiment, similarly to the cases of the first to third embodiments, the dust collection efficiency of laser spatter LS can be enhanced, and the adhesion of the laser spatter LS to the laser light source unit 10 can be prevented in the sheet width direction. In the fourth embodiment, since the gas supply units 80 corresponding to all of the plurality of laser processing parts 70 are integrated into one, the number of members of the gas supply unit 80 can be reduced. The gas supply unit 80 can be easily assembled and maintained.

### -Fifth Embodiment-

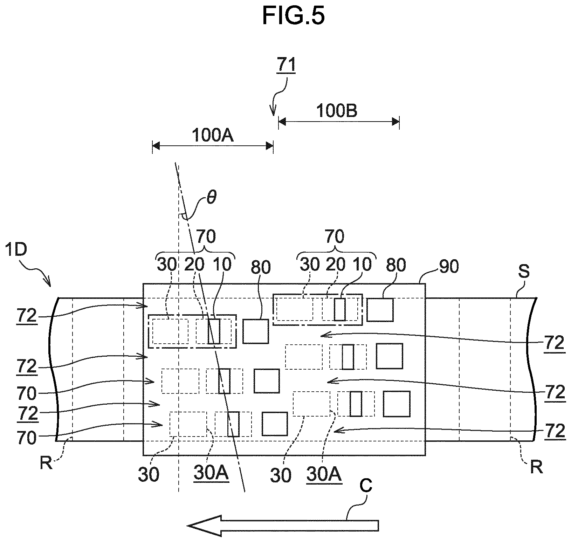

In the second to fourth embodiments, the case in which the arrangement direction of the plurality of laser processing parts 70 is in parallel with the sheet width direction has been described as an example, but in the disclosure, the arrangement direction of the plurality of laser processing parts 70 arranged in the sheet width direction may intersect the sheet width direction. As illustrated in Fig. 5, in a laser processing device 1D according to the fifth embodiment, an arrangement direction of three laser processing parts 70 arranged in the sheet width direction intersects the sheet width direction.

Fig. 5 illustrates a case in which an intersection angle θ between the arrangement direction of the three laser processing parts 70 and the sheet width direction is about 15 degrees, but the intersection angle θ is not limited thereto in the disclosure. In the disclosure, the intersection angle θ between the arrangement direction of the plurality of laser processing parts 70 and the sheet width direction can be randomly set to, for example, less than 45 degrees.

The configurations of the other members in the fifth embodiment are similar to those of the members having the same names in the fourth embodiment, and thus the redundant description thereof will be omitted. Also in the fifth embodiment, similarly to the cases of the first to fourth embodiments, the dust collection efficiency of laser spatter LS can be enhanced, and the adhesion of the laser spatter LS to the laser light source unit 10 can be prevented in the sheet width direction.

### -Sixth Embodiment-

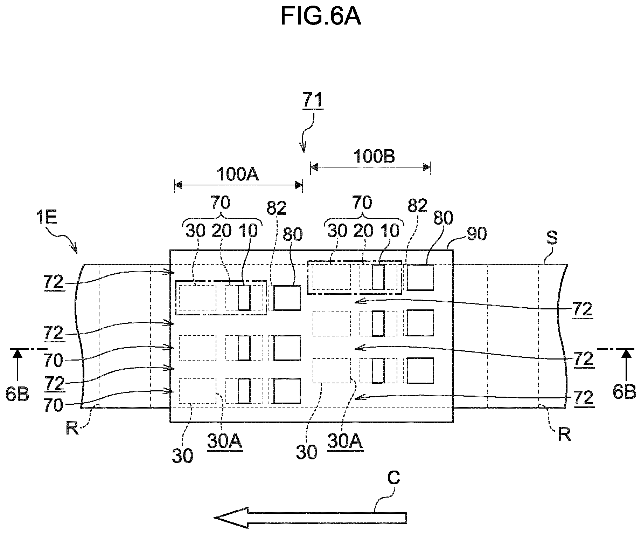

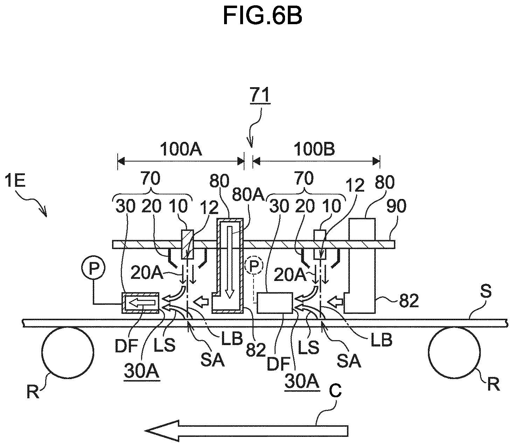

As illustrated in Figs. 6A and 6B, the gas supply units 80 of a laser processing device 1E according to the sixth embodiment are connected to respective supply ducts 82 having respective duct opening portions that are arranged to face the dust collection ports 30A and discharge the second gas 80A. A shape and a size of the supply duct 82 are set to such an extent that a suction flow in a space near the irradiation site SA is not hindered. The configurations of the other members in the sixth embodiment are similar to those of the members having the same names in the first to fifth embodiments, and thus the redundant description thereof will be omitted.

### (Operations and Effects of Sixth Embodiment)

Also in the sixth embodiment, similarly to the cases of the first to fifth embodiments, the dust collection efficiency of laser spatter LS can be enhanced, and the adhesion of the laser spatter LS to the laser light source unit 10 can be prevented in the sheet width direction. In the sixth embodiment, the gas supply units 80 are connected to respective supply ducts 82 having respective duct opening portions that are arranged to face the dust collection ports 30A and discharge the second gas 80A. The suction force of the dust collection mechanism units 30 can be further stabilized by the supply ducts 82.

### (First Comparative Example)

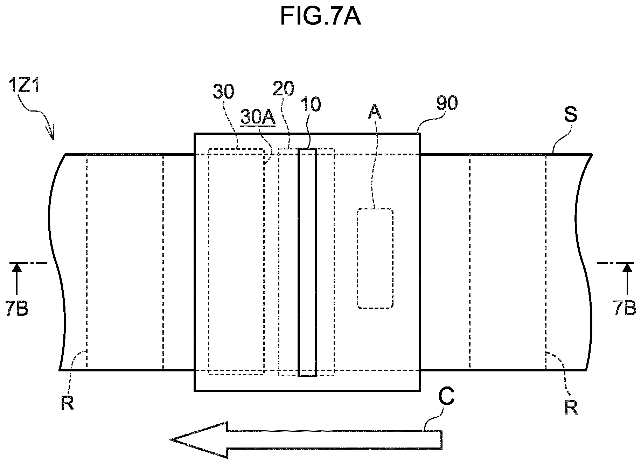

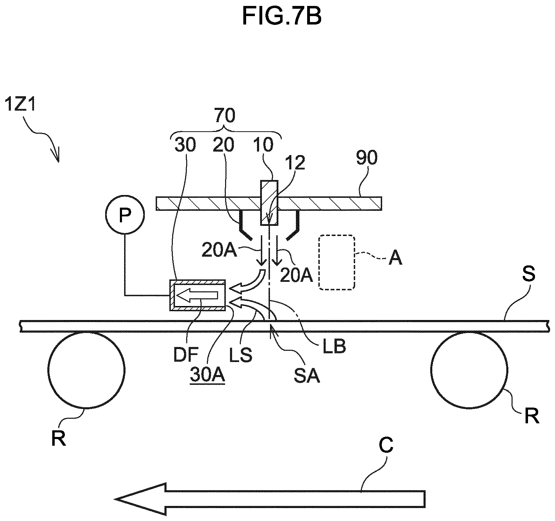

On the other hand, as illustrated in Fig. 7, a laser processing device 1Z1 according to the first comparative example does not include the gas supply unit 80 as compared with the laser processing device 1 according to the first embodiment. A configuration of the laser processing device 1Z1 according to the first comparative example except for the gas supply unit 80 is similar to that of the laser processing device 1 according to the first embodiment. In the first comparative example, since the second gas is not supplied, a stagnation region A with an insufficient fluid is formed, and as a result, it is not possible for uniform suction to be executed in the sheet width direction.

Fig. 7 illustrates a case in which one stagnation region A is formed at the center in the sheet width direction, but the number and formation positions of the stagnation regions are not limited thereto in the disclosure. The number of stagnation regions may be plural. The stagnation region can also be formed at an end portion in the sheet width direction.

### (Second Comparative Example)

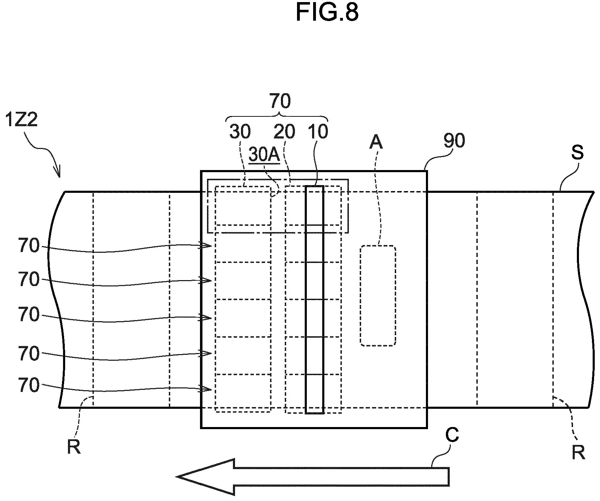

As illustrated in Fig. 8, a laser processing device 1Z2 according to the second comparative example does not include the gas supply unit 80 as compared with the laser processing device 1 according to the second embodiment. A configuration of the laser processing device 1Z2 according to the second comparative example except for the gas supply unit 80 is similar to that of the laser processing device 1 according to the second embodiment. In the second comparative example, similarly to the first comparative example, since the second gas is not supplied, a stagnation region A with an insufficient fluid is formed, and as a result, it is not possible for uniform suction to be executed in the sheet width direction.

### (Third Comparative Example)

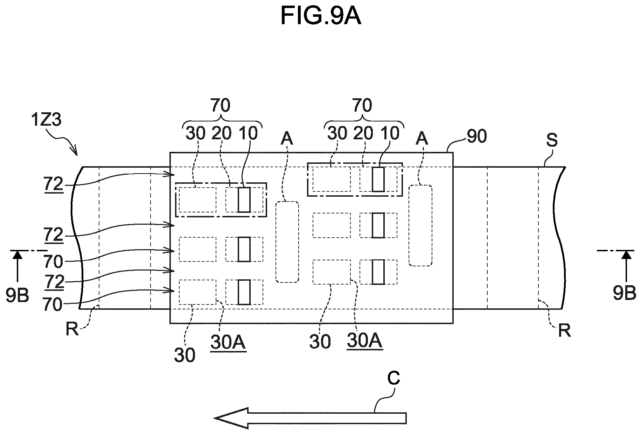

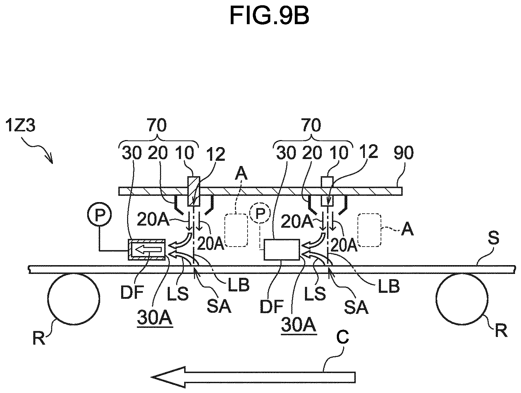

As illustrated in Fig. 9, a laser processing device 1Z3 according to the third comparative example does not include the gas supply unit 80 as compared with the laser processing device 1 according to the third embodiment. A configuration of the laser processing device 1Z3 according to the third comparative example except for the gas supply unit 80 is similar to that of the laser processing device 1 according to the third embodiment. In the third comparative example, similarly to the first comparative example, since the third gas is not supplied, a stagnation region A with an insufficient fluid is formed, and as a result, it is not possible for uniform suction to be executed in the sheet width direction.

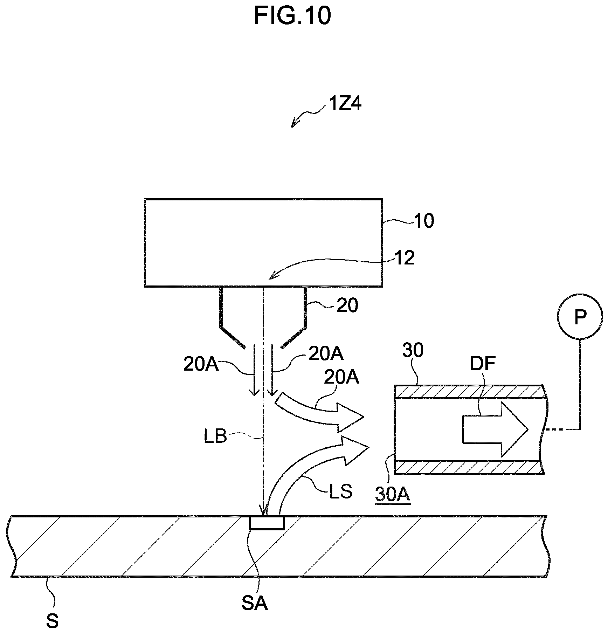

Next, dust collection operations in laser processing devices 1Z4 to 1Z7 according to fourth comparative example to seventh comparative example that do not include the gas supply unit 80 unlike the first to sixth embodiments will be described with reference to Figs. 10 to 13.

### (Fourth Comparative Example)

As illustrated in Fig. 10, the laser processing device 1Z4 according to the fourth comparative example differs from the laser processing device according to the first comparative example mainly in that the ceiling plate 90 is not provided. In the fourth comparative example, the steel sheet S is irradiated with the laser light LB through a nozzle opening of the gas injection unit 20. The gas injection unit 20 is an air nozzle. A discharge jet of the first gas 20A from the gas injection unit 20 is directed from a position in the vicinity of the emission portion 12 to the irradiation site SA of the laser light LB on the surface of the steel sheet S in parallel with an optical axis of the laser light LB.

In the fourth comparative example, a discharge jet of the first gas 20A that does not reach the irradiation site SA is diffused toward an outer side from the optical axis, that is, toward an outer side from the nozzle main axis direction, along the surface of the steel sheet S between the gas injection unit 20 and the steel sheet S. The discharge jet of the first gas 20A from the gas injection unit 20 is sufficiently guided to a suction airflow DF of the dust collection mechanism unit 30. In the fourth comparative example, the discharge jet of the first gas 20A injected in parallel with the optical axis direction from the gas injection unit 20 flows along the flow of the suction airflow DF of the dust collection mechanism unit 30 to be straightened. Therefore, it is difficult to generate a low-pressure portion that guides laser spatter LS to the gas injection unit 20.

In the fourth comparative example, the flow of the discharge jet of the first gas 20A toward the irradiation site SA and the flow of the discharge jet of the first gas 20A toward the outer side from the nozzle main axis direction prevent the laser spatter LS from adhering to the emission portion 12 of the laser light source unit 10. Since the discharge jet of the first gas 20A is directed toward the outer side from the optical axis, the laser spatter LS inside the groove at the irradiation site SA is less likely to be scattered by the discharge jet of the first gas 20A. The discharge jet of the first gas 20A toward the outer side from the optical axis guides the laser spatter LS generated at the irradiation site SA to the suction airflow DF.

The fourth comparative example can be applied without any problem in a case in which the plate width of the steel sheet is narrow. However, in a case in which the plate width of the steel sheet is wide, the gas supply unit 80 is not provided in the fourth comparative example as compared with the first to sixth embodiments, and thus the second gas is not supplied toward the irradiation site SA. Therefore, unlike the first to sixth embodiments, it is not possible to curb occurrence of a portion having no gas flow by the second gas. As a result, it is difficult to stabilize the suction force of the dust collection mechanism unit 30 in the sheet width direction.

### (Fifth Comparative Example)

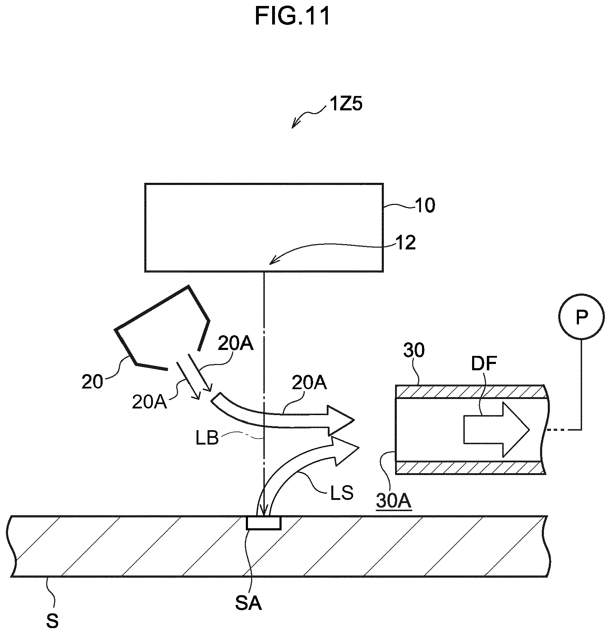

As illustrated in Fig. 11, in the laser processing device 1Z5 according to the fifth comparative example, unlike the fourth comparative example, the gas injection unit 20 is not attached to a lower portion of the laser light source unit 10, but is provided at a position away from the emission portion 12 on a left side of the optical axis of the laser light LB. The gas injection unit 20 is an air nozzle. Therefore, the discharge jet of the first gas 20A from the gas injection unit 20 is not in parallel with the optical axis of the laser light LB, but is directed to the irradiation site SA of the laser light LB on the surface of the steel sheet S in a state of intersecting the optical axis. Alternatively, a low-pressure portion is formed by the discharge jet of the first gas 20A from the gas injection unit 20, and the laser spatter LS is guided to the gas injection unit 20.

Also in the fifth comparative example, similarly to the case of the fourth comparative example, the discharge jet of the first gas 20A that does not reach the irradiation site SA is diffused toward the outer side from the nozzle main axis direction, along the surface of the steel sheet S between the gas injection unit 20 and the steel sheet S. However, since the discharge jet of the first gas 20A is not formed in the vicinity of the emission portion 12 of the laser light source unit 10, the effect of preventing adhesion of the laser spatter LS to the emission portion 12 is smaller than that of the fourth comparative example. It is difficult to stabilize the suction force of the dust collection mechanism unit 30 in the sheet width direction as compared with the first to sixth embodiments.

### (Sixth Comparative Example)

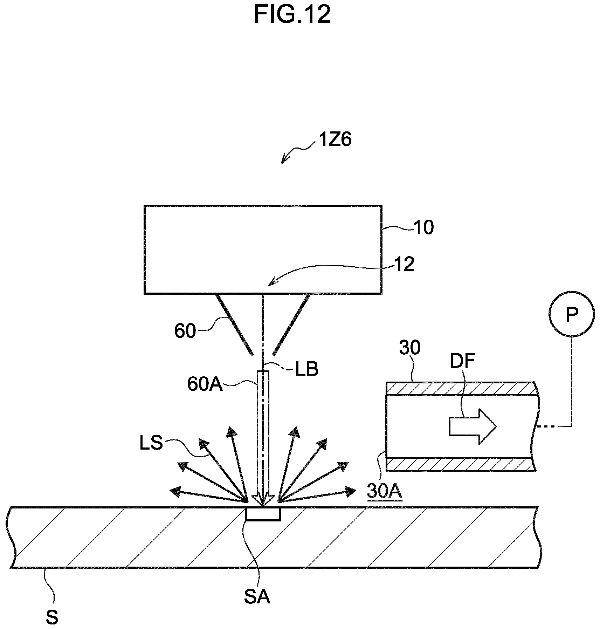

As illustrated in Fig. 12, the laser processing device 1Z6 according to the sixth comparative example differs from the laser processing device 1Z4 according to the fourth comparative example mainly in that, instead of an air nozzle, an air knife 60 is used as the gas injection unit. In the sixth comparative example, the steel sheet S is irradiated with the laser light LB through a nozzle opening of the air knife 60. A discharge jet 60A from the air knife 60 is directed from a position in the vicinity of the emission portion 12 to the irradiation site SA of the laser light LB on the surface of the steel sheet S, in parallel with the optical axis of the laser light LB.

In the sixth comparative example, due to the discharge jet 60A reaching the irradiation site SA, the laser spatter LS generated at the irradiation site SA actively scatters substantially radially from the irradiation site SA. The scattered laser spatter LS is not sufficiently guided to the suction airflow DF of the dust collection mechanism unit 30. The laser spatter LS is likely to adhere to the emission portion 12 of the laser light source unit 10. Alternatively, a low-pressure portion is formed by the discharge jet 60A from the air knife 60, and the laser spatter LS is guided to the gas injection unit 20. It is difficult to stabilize the suction force of the dust collection mechanism unit 30 in the sheet width direction as compared with the first to sixth embodiments.

### (Seventh Comparative Example)

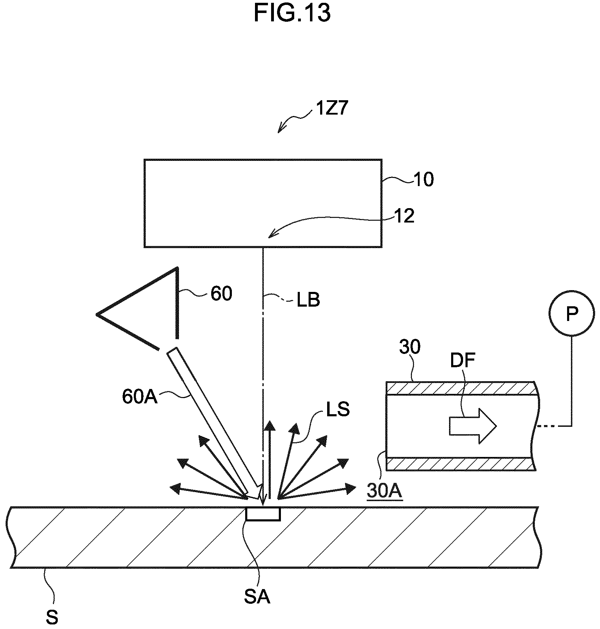

As illustrated in Fig. 13, in the laser processing device 1Z7 according to the seventh comparative example, unlike the sixth comparative example, the air knife 60 is not attached to the lower portion of the laser light source unit 10, but is provided at a position away from the emission portion 12 on a left side of the optical axis of the laser light LB. Therefore, the discharge jet 60A from the air knife 60 is not in parallel with the optical axis of the laser light LB, but is directed to the irradiation site SA of the laser light LB on the surface of the steel sheet S in a state of intersecting the optical axis.

Also in the seventh comparative example, similarly to the sixth comparative example, due to the discharge jet 60A reaching the irradiation site SA, the laser spatter LS generated at the irradiation site SA actively scatters substantially radially from the irradiation site SA. Similarly to the sixth comparative example, the scattered laser spatter LS is not sufficiently guided to the suction airflow DF of the dust collection mechanism unit 30. A low-pressure portion is generated by the discharge jet 60A from the air knife 60, and as a result, the laser spatter LS is likely to adhere to the emission portion 12 of the laser light source unit 10. It is difficult to stabilize the suction force of the dust collection mechanism unit 30 in the sheet width direction as compared with the first to sixth embodiments.

### Examples

### [Analysis Example 1]

Next, Analysis Example 1 regarding the dust collection efficiency of the laser spatter LS in a case in which a relative suction flow rate ratio of the second gas is changed in the laser processing devices according to the disclosure will be described. The relative suction flow rate ratio of the second gas is defined by a "sum of flow rates of second gas"/"sum of suction flow rates".

Specifically, analysis was conducted by a computer simulation using Fluent, which is commercially available numerical calculation software. First, analysis models corresponding to the laser processing devices 1A to 1E according to the first to sixth embodiments were set as first to sixth examples, respectively. Analysis models corresponding to the laser processing devices 1Z1 to 1Z3 according to the first to third comparative examples were set.

Then, the dust collection efficiency of the laser spatter LS in the case in which the relative suction flow rate ratio of the second gas was changed was analyzed using the set analysis models. Similarly, a peripheral adhesion ratio of the laser spatter LS was analyzed.

The dust collection efficiency of the laser spatter LS is calculated as (Number of Particles of Laser Spatter LS Reaching Deep into Dust Collection Channel Provided in Dust Collection Mechanism Unit 30)/(Number of Particles of Generated Laser Spatter LS). In the computer simulation, the laser spatter LS is set to be reflected from a wall surface of the dust collection mechanism unit 30, and, even among particles having reached and coming into contact with the wall surface, particles of the laser spatter LS that have reached deep into the dust collection channel are counted as particles contributing to the dust collection efficiency.

The peripheral adhesion ratio of the laser spatter LS is calculated as {(Number of Particles of Laser Spatter LS in Contact with Steel sheet S) + (Number of Particles of Laser Spatter LS in Contact with Gas Injection Unit 20)}/(Number of Particles of Generated Laser Spatter LS).

### (Analysis Conditions of Analysis Example 1)

In Analysis Example 1, regarding the first to sixth examples, the dust collection efficiency of laser spatter and the peripheral adhesion ratio of laser spatter were calculated in the case in which the relative suction flow rate ratio of the second gas was changed to each of 0.1, 0.2, 1.0, 1.5, and 1.6. In the first to sixth examples and the first to third comparative examples, a relative suction flow rate ratio of the first gas was set to 0.15%.

The dust collection efficiency of laser spatter in Analysis Example 1 is illustrated in Table 1, and the peripheral adhesion ratio of laser spatter is illustrated in Table 2.

**[Table 1]**

| Collection Efficiency of Laser Spatter [%] | Relative Suction Flow Rate Ratio of Second Gas | | | | |
|---|---|---|---|---|---|
| | 0.1 | 0.2 | 1.0 | 1.5 | 1.6 |
| First Example | 90 | 99 | 99 | 99 | 80 |
| Second Example | 90 | 99 | 99 | 99 | 80 |
| Third Example | 90 | 99 | 99 | 99 | 80 |
| Fourth Example | 90 | 99 | 99 | 99 | 80 |
| Fifth Example | 90 | 99 | 99 | 99 | 80 |
| Sixth Example | 90 | 99 | 99 | 99 | 80 |
| First comparative Example | 80 | | | | |
| Second comparative Example | 80 | | | | |
| Third comparative Example | 80 | | | | |

**[Table 2]**

| Peripheral Adhesion | Relative Suction Flow Rate Ratio of Second Gas | | | | |
|---|---|---|---|---|---|
| Ratio of Laser Spatter [%] | 0.1 | 0.2 | 1.0 | 1.5 | 1.6 |
| First Example | 5 | 0 | 0 | 0 | 15 |
| Second Example | 5 | 0 | 0 | 0 | 15 |
| Third Example | 5 | 0 | 0 | 0 | 15 |
| Fourth Example | 5 | 0 | 0 | 0 | 15 |
| Fifth Example | 5 | 0 | 0 | 0 | 15 |
| Sixth Example | 5 | 0 | 0 | 0 | 15 |
| First comparative Example | 10 | | | | |
| Second comparative Example | 10 | | | | |
| Third comparative Example | 10 | | | | |

As illustrated in Table 1, in the first to sixth examples, it has been found that, in a case in which the relative suction flow rate ratio of the second gas was from 0.2 times to 1.5 times, a high dust collection efficiency of laser spatter of 99% was obtained. As illustrated in Table 2, in the first to sixth examples, in a case in which the relative suction flow rate ratio of the second gas was from 0.2 times to 1.5 times, the peripheral adhesion ratio of laser spatter was 0%.

It has been found that, in a case in which the relative suction flow rate ratio of the second gas was lower than 0.2 times, the peripheral adhesion ratio of laser spatter increased. Specifically, in a case in which the relative suction flow rate ratio of the second gas was 0.1 times, in all of the first to sixth examples, the dust collection efficiency of laser spatter decreased to 90% as illustrated in Table 1, and the peripheral adhesion ratio of laser spatter was 5% as illustrated in Table 2.

It has been found that, in a case in which the relative suction flow rate ratio of the second gas exceeds 1.5 times, the dust collection efficiency of laser spatter was 80% or lower, and the peripheral adhesion ratio of laser spatter increased. Specifically, as illustrated in Table 1, in a case in which the relative suction flow rate ratio of the second gas was 1.6 times, in all of the first to sixth examples, the dust collection efficiency of laser spatter decreased to 80%, and the peripheral adhesion ratio of laser spatter was 15% as illustrated in Table 2.

On the other hand, in the first to third comparative examples in which the second gas was not injected, the dust collection efficiency of laser spatter remained at 80% regardless of the relative suction flow rate ratio of the second gas as illustrated in Table 1. In the first to third comparative examples, as illustrated in Table 2, the peripheral adhesion ratio of laser spatter was 10% regardless of the relative suction flow rate ratio of the second gas.

From Analysis Example 1, it has been found that, in a case in which the gas supply unit supplies the second gas in a state in which a total flow rate of the second gas is from 0.2 times to 1.5 times a total suction flow rate of the dust collection mechanism unit, both improvement of the dust collection efficiency and curbing of the peripheral adhesion ratio of laser spatter can be achieved.

### [Analysis Example 2]

Next, Analysis Example 2 regarding the dust collection efficiency of the laser spatter in a case in which the relative suction flow rate ratio of the first gas is changed in the laser processing devices according to the disclosure will be described. The relative suction flow rate ratio of the first gas is defined by a "sum of flow rates of first gas"/"sum of suction flow rates".

### (Analysis Conditions of Analysis Example 2)

In Analysis Example 2, regarding the first to sixth examples and the first to third comparative examples, the dust collection efficiency of laser spatter and the peripheral adhesion ratio of laser spatter were calculated in the case in which the relative suction flow rate ratio of the first gas was changed to each of 0.05, 0.10, 0.15, 0.20, and 0.25. In the first to sixth examples, the relative suction flow rate ratio of the second gas was set to 0.6%. Other analysis conditions in Analysis Example 2 are the same as those in Analysis Example 1.

The dust collection efficiency of laser spatter in Analysis Example 2 is illustrated in Table 3, and the peripheral adhesion ratio of laser spatter is illustrated in Table 4.

**[Table 3]**

| Collection Efficiency of Laser Spatter [%] | Relative Suction Flow Rate Ratio of First Gas | | | | |
|---|---|---|---|---|---|
| | 0.05 | 0.10 | 0.15 | 0.20 | 0.25 |
| First Example | 90 | 99 | 99 | 99 | 90 |
| Second Example | 90 | 99 | 99 | 99 | 90 |
| Third Example | 90 | 99 | 99 | 99 | 90 |
| Fourth Example | 90 | 99 | 99 | 99 | 90 |
| Fifth Example | 90 | 99 | 99 | 99 | 90 |
| Sixth Example | 90 | 99 | 99 | 99 | 90 |
| First comparative Example | 80 | 80 | 80 | 80 | 80 |
| Second comparative Example | 80 | 80 | 80 | 80 | 80 |
| Third comparative Example | 80 | 80 | 80 | 80 | 80 |

**[Table 4]**

| Peripheral Adhesion Ratio of Laser Spatter [%] | Relative Suction Flow Rate Ratio of First Gas | | | | |
|---|---|---|---|---|---|
| | 0.05 | 0.10 | 0.15 | 0.20 | 0.25 |
| First Example | 5 | 0 | 0 | 0 | 5 |
| Second Example | 5 | 0 | 0 | 0 | 5 |
| Third Example | 5 | 0 | 0 | 0 | 5 |
| Fourth Example | 5 | 0 | 0 | 0 | 5 |
| Fifth Example | 5 | 0 | 0 | 0 | 5 |
| Sixth Example | 5 | 0 | 0 | 0 | 5 |
| First comparative Example | 10 | 10 | 10 | 10 | 10 |
| Second comparative Example | 10 | 10 | 10 | 10 | 10 |
| Third comparative Example | 10 | 10 | 10 | 10 | 10 |

As illustrated in Table 3, in the first to sixth examples, it has been found that, in a case in which the relative suction flow rate ratio of the first gas was from 0.1 times to 0.2 times, a high dust collection efficiency of laser spatter of 99% was obtained. As illustrated in Table 4, in the first to sixth examples, in a case in which the relative suction flow rate ratio of the first gas was from 0.1 times to 0.2 times, the peripheral adhesion ratio of laser spatter was 0%.

It has been found that, in a case in which the relative suction flow rate ratio of the first gas was lower than 0.1 times, the dust collection efficiency of laser spatter decreased. Specifically, in a case in which the relative suction flow rate ratio of the first gas was 0.05 times, in all of the first to sixth examples, the dust collection efficiency of laser spatter decreased to 90% as illustrated in Table 3, and the peripheral adhesion ratio of laser spatter was 5% as illustrated in Table 4.

It has been found that, in a case in which the relative suction flow rate ratio of the first gas exceeded 0.2 times, the dust collection efficiency of laser spatter decreased. Specifically, as illustrated in Table 3, in a case in which the relative suction flow rate ratio of the first gas was 0.25 times, in all of the first to sixth examples, the dust collection efficiency of laser spatter decreased to 90%, and the peripheral adhesion ratio of laser spatter was 5% as illustrated in Table 4.

On the other hand, in the first to third comparative examples in which the second gas was not injected, the dust collection efficiency of laser spatter remained at 80% regardless of the relative suction flow rate ratio of the first gas as illustrated in Table 3. In the first to third comparative examples, as illustrated in Table 4, the peripheral adhesion ratio of laser spatter was 10% regardless of the relative suction flow rate ratio of the first gas.

From Analysis Example 2, it has been found that, in a case in which the gas injection unit injects the first gas in a state in which a total flow rate of the first gas is from 0.1 times to 0.2 times a total suction flow rate of the dust collection mechanism unit, both improvement of the dust collection efficiency and curbing of the peripheral adhesion ratio of laser spatter can be achieved.

### <Other Embodiments>

Although the disclosure has been described with reference to the above disclosed embodiments, it should not be understood that the disclosure is limited to the description and the drawings constituting a part of this disclosure. It should be understood that various alternative embodiments, examples, and operational technologies will be obvious to those skilled in the art from the disclosure.

### (Shape of Dust Collection Mechanism Unit)

For example, in the disclosure, in a case in which the laser processing device is viewed from a side surface from which a thickness of the steel sheet S can be checked as illustrated in Fig. 1B, it is preferable that a distance between an upper surface of the dust collection mechanism unit 30 and a position of the surface of the steel sheet S at the irradiation site SA of the laser light LB gradually increases in a direction in which the laser spatter LS is suctioned via the dust collection port 30A.

More specifically, although not illustrated, an internal space of the dust collection mechanism unit 30 may have a structure, for example, a tapered shape, in which a height of the internal space of the dust collection mechanism unit 30 continuously increases in the direction in which the laser spatter LS is suctioned via the dust collection port 30A. The internal space of the dust collection mechanism unit 30 may have a stairstep structure such that the height of the internal space of the dust collection mechanism unit 30 increases in a stepwise manner in the direction in which the laser spatter LS is suctioned via the dust collection port 30A.

The external shape of the dust collection mechanism unit 30, more specifically, the external shape of a dust collection hood, may be a substantially parallelogram. A shape of a bottom surface of the dust collection mechanism unit 30 is not particularly limited as long as the dust collection mechanism unit does not hinder the air flow. The shape of the bottom surface of the dust collection mechanism unit 30 may be a horizontal planar shape or may be a shape in which a distance from the surface of the steel sheet S becomes gradually longer.

The distance between the upper surface of the dust collection mechanism unit 30 and the position of the surface of the steel sheet S at the irradiation site SA of the laser light LB gradually increases in the direction in which the laser spatter LS is suctioned from the dust collection port 30A. In this manner, a parabolic air flow is not hindered in the internal space of the dust collection mechanism unit 30. Therefore, the laser spatter LS is collected along the parabolic air flow. As a result, it is possible to prevent the laser spatter LS from directly hitting an upper inner wall surface in the internal space, and it is possible to more reliably prevent the adhesion of the laser spatter LS.

### (Use of Carbon Plate for Dust Collection Mechanism Unit)

Although not illustrated, a carbon plate may be disposed on a vertically upper portion of an inner wall of the dust collection mechanism unit 30. The dust collection hood constituting a wall surface of the dust collection mechanism unit 30 is generally made of various metals. The carbon plate is disposed at a site of the dust collection mechanism unit 30, which the collected laser spatter LS can reach, so that it is possible to prevent direct reaction between the laser spatter LS and the metal in the wall surface, and to prevent the adhesion of the laser spatter LS. As a result, it is possible to reduce the number of times of maintenance of the inner wall for removing the adhered laser spatter LS.

The carbon plate may be provided on the entire upper surface of the dust collection mechanism unit 30, or may be disposed on a part of the upper surface of the dust collection mechanism unit 30. The carbon plate may be disposed at least at a portion to which the laser spatter LS can adhere. The carbon plate can be mounted on a site to which the laser spatter LS can adhere, such as a side surface of the dust collection mechanism unit 30, in addition to the upper surface of the dust collection mechanism unit 30. Instead of mounting the carbon plate on the inner wall of the dust collection mechanism unit 30, the wall surface itself of the dust collection mechanism unit 30 may be made of the carbon plate.

### (Straightening Plate)

Although not illustrated, a straightening plate may be further provided in addition to the laser light source unit 10, the gas injection unit 20, and the dust collection mechanism unit 30. The straightening plate can be provided at a position facing the dust collection port 30A of the laser spatter LS in the dust collection mechanism unit 30.

The straightening plate is a member provided to more reliably prevent the air flow from stagnating in the vicinity of the irradiation position of the laser light LB. The straightening plate further provided enables the air flow to be further stabilized in the vicinity of the irradiation site SA of the laser light LB. Further, the straightening plate further provided enables the flow velocity of the air flow to be increased as a result of reduction in an aperture ratio of the dust collection port 30A in the vicinity of the irradiation site SA of the laser light LB, and the laser spatter LS can be more reliably collected.

A disposition direction of the straightening plate is not particularly defined, and may be a direction in which a long side of the straightening plate may be substantially in parallel with a vertical direction or a direction in which the long side of the straightening plate may be substantially in parallel with a horizontal direction. The straightening plate may be disposed obliquely with respect to the vertical direction or the horizontal direction. A material or a specific shape of the straightening plate is not particularly defined, and may be selected depending on a mounting environment of the straightening plate, if appropriate.

### (Modification Example)

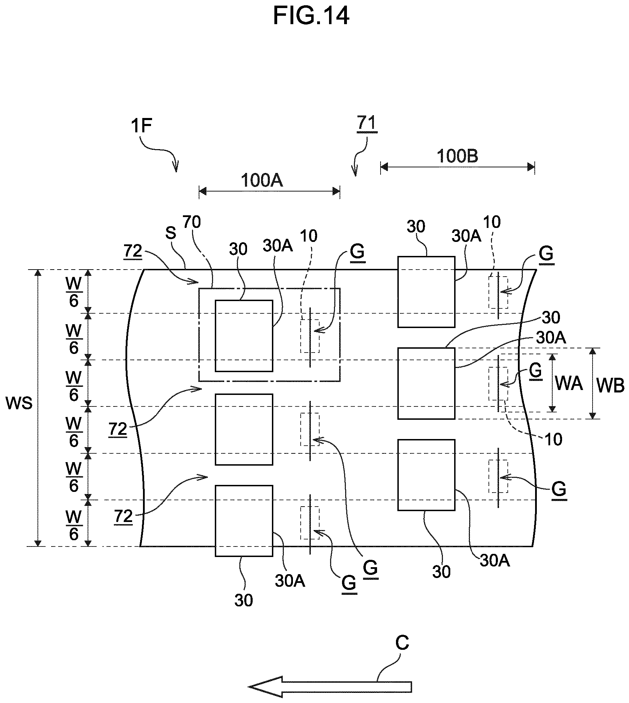

As illustrated in Fig. 14, a laser processing device 1F according to a modification example is disposed on a continuous processing line for performing grooving in the surface of the steel sheet S with the laser light LB, similarly to the laser processing device 1B according to the third embodiment in Fig. 3A.

In the first embodiment, one dust collection mechanism unit 30 is disposed such that an opening surface of the dust collection port 30A has one level. However, similarly to the case of the third embodiment, the modification example differs from the first embodiment in that the dust collection port 30A has multistage opening surfaces, that is, a plurality of dust collection mechanism units 30 are arranged.

As illustrated in Fig. 14, a plate width WS of the steel sheet S is equally divided into six in the sheet width direction of the steel sheet S (that is, the sheet width direction perpendicular to the conveyance direction C of the steel sheet S and in parallel with the plate width WS of the steel sheet S). The laser processing part 70 is assigned to each of the equally divided regions. In the modification example, the case in which the plate width WS is equally divided into six (that is, in a case in which N = 6) has been described as an example, but in the disclosure, N is any natural number.

Fig. 14 illustrates a maximum groove width WA of the groove G formed by the laser light source unit 10 of one laser processing part 70. The maximum groove width WA is the maximum width of the groove G that can be processed by one scan of the laser light LB from the laser light source unit 10. In Fig. 14, the laser light source unit 10 is illustrated by a broken line for a clear view, and the gas injection unit 20, the gas supply unit 80, the ceiling plate 90, and the like are not illustrated.

Also in the modification example, similarly to the case of the third embodiment, the three dust collection mechanism units 30 adjacent in the sheet width direction are arranged with the interval 72 therebetween so as not to interfere with each other. The first laser processing set 100A and the second laser processing set 100B are arranged in two stages with the interval 71 in the conveyance direction C.

The third laser processing part 70 of the second laser processing set 100B provided at the upstream side in the conveyance direction C is disposed at a position overlapping with the interval 72 between the first laser processing part 70 and the second laser processing part 70 in the first laser processing set 100A provided at downstream side. In the disclosure, N dust collection mechanism units are arranged with intervals in at least one of the sheet width direction and the conveyance direction, and thereby it is possible to curb interference between the dust collection mechanism units.

In the disclosure, it is not essential to arrange the plurality of dust collection mechanism units with intervals, and as in the case of the six dust collection mechanism units 30 in the second embodiment in Fig. 2, the N dust collection mechanism units 30 may be arranged adjacent to each other without an interval in the sheet width direction.

In the modification example, a natural number N can be selected to satisfy WS < (N × WA) with respect to the maximum groove width WA and the plate width WS of one groove G. In the present modification example, N = 6.

In the modification example, an opening width WB of one dust collection port 30A is larger than the maximum groove width WA of one groove G corresponding to the dust collection port 30A (that is, WA < WB). The sum of the six opening widths WB is larger than the plate width WS (that is, WS < (6 × WB)). In other words, in the disclosure, the sum of the N opening widths WB is larger than the plate width WS. (that is, WS < (N × WB)) The configurations of the other members in the modification example are similar to those of the members having the same names in the third embodiment, and thus the redundant description thereof will be omitted.

### (Operations and Effects of Modification Example)

Also in the modification example, similarly to the case of the third embodiment, the dust collection efficiency of laser spatter LS can be enhanced, and the adhesion of the laser spatter LS to the laser light source unit 10 can be prevented in the sheet width direction. Also in the modification example, similarly to the case of the third embodiment, the dust collection mechanism units 30 are disposed such that the opening surfaces of the dust collection port 30A are in parallel with the groove G processed by each laser processing part 70. Therefore, the laser spatter LS generated from the groove G can be efficiently collected.

In the modification example, the opening width WB of one dust collection port 30A is larger than the maximum groove width WA of one groove G corresponding to the dust collection port 30A. Therefore, the opening width WB can improve the dust collection efficiency of the laser spatter LS generated from the groove G as compared with the case in which the opening width of the dust collection port 30A is equal to or smaller than the maximum groove width WA of the groove G.

The disclosure can also be configured by partially combining the configurations illustrated in the plurality of accompanying drawings. As described above, the disclosure includes various embodiments and the like that are not described above, and the technical scope of the disclosure is defined only by the invention specific matters in the claims that are valid from the above description.

### <<Supplementary Note>>

From the specification, the following aspects are conceptualized.

Aspect 1 provides a laser processing device including:
a laser light source unit that irradiates, with a laser light, a surface of a steel sheet being conveyed in a predetermined conveyance direction;
a gas injection unit that injects a first gas in parallel with an optical axis direction of the laser light toward an irradiation site of the laser light;
a dust collection mechanism unit that is provided at either an upstream side or a downstream side of the irradiation site in the conveyance direction and that collects laser spatter generated from the irradiation site via a dust collection port; and
a gas supply unit that is disposed at an opposite side of the laser light source unit from the dust collection mechanism unit in the conveyance direction, and that supplies a second gas between the gas supply unit and the steel sheet.

Aspect 2 provides the laser processing device according to Aspect 1, in which
the gas supply unit is positioned at an upper side relative to the dust collection port.

Aspect 3 provides the laser processing device according to Aspect 1 or 2, including a plurality of laser processing parts arranged along a sheet width direction of the steel sheet as a laser processing set, in which each of the laser processing parts includes the laser light source unit, the gas injection unit, and the dust collection mechanism unit.

Aspect 4 provides the laser processing device according to Aspect 3, in which
a plurality of the gas supply units are provided respectively corresponding to each of the plurality of laser processing parts in the laser processing set.

Aspect 5 provides the laser processing device according to Aspect 3, in which
one gas supply unit is provided for all of the plurality of laser processing parts in the laser processing set.

Aspect 6 provides the laser processing device according to any one of Aspects 3 to 5, in which,
in the laser processing set, the dust collection mechanism unit of a first laser processing part and the dust collection mechanism unit of a second laser processing part are provided with an interval therebetween, or the dust collection mechanism unit of the laser processing part positioned at an end portion in the sheet width direction is provided at an interval from the end portion of the steel sheet, the first laser processing part and the second laser processing part being adjacent to each other in the sheet width direction.

Aspect 7 provides the laser processing device according to Aspect 6, further including
a third laser processing part disposed at a position overlapping with the interval in the conveyance direction on at least one of the upstream side or the downstream side of the laser processing set in the conveyance direction.

Aspect 8 provides the laser processing device according to any one of Aspects 3 to 7, further including
a ceiling plate to which the plurality of laser processing parts included in the laser processing set are attached.

Aspect 9 provides the laser processing device according to any one of Aspects 1 to 8, in which
the gas supply unit is connected to a supply duct having a duct opening portion which is disposed to face the dust collection port and through which the second gas is released.

Aspect 10 provides the laser processing device according to any one of Aspects 1 to 9, in which
the gas supply unit supplies the second gas in a state in which a total flow rate of the second gas is from 0.2 times to 1.5 times a total suction flow rate of the dust collection mechanism unit.

Aspect 11 provides the laser processing device according to any one of Aspects 1 to 10, in which
the gas injection unit injects the first gas in a state in which a total flow rate of the first gas is from 0.1 times to 0.2 times a total suction flow rate of the dust collection mechanism unit.

Aspect 12 provides a laser processing method according to the disclosure including:
irradiating, with a laser light, a surface of a steel sheet being conveyed in a predetermined conveyance direction, using a laser light source unit;
stirring up, from the surface of the steel sheet, laser spatter generated from an irradiation site by injecting a first gas in parallel with an optical axis direction of the laser light toward the irradiation site of the laser light, using a gas injection unit;
collecting the laser spatter via a dust collection port of a dust collection mechanism unit provided at either an upstream side or a downstream side of the irradiation site in the conveyance direction; and
boosting a suction flow of the laser spatter toward the dust collection port by supplying a second gas between a gas supply unit and the steel sheet using a gas supply unit disposed at an opposite side of the laser light source unit from the dust collection mechanism unit in the conveyance direction.

Aspect 13 provides the laser processing method according to Aspect 12, including irradiating the surface of the steel sheet with the laser light using a laser processing device comprising a plurality of laser processing parts arranged along a sheet width direction of the steel sheet as a laser processing set, in which each of the laser processing parts includes the laser light source unit, the gas injection unit, and the dust collection mechanism unit.

Aspect 14 provides the laser processing method according to Aspect 13, in which
the surface of the steel sheet is irradiated with the laser light in a state in which, in the laser processing set, the dust collection mechanism unit of a first laser processing part and the dust collection mechanism unit of a second laser processing part are provided with an interval therebetween, or the dust collection mechanism unit of the laser processing part positioned at an end portion in the sheet width direction is provided at an interval from the end portion of the steel sheet, the first laser processing part and the second laser processing part being adjacent to each other in the sheet width direction.

### <<Additional Aspects>>

The following additional aspects are conceptualized from the specification.

Additional Aspect 1 provides a laser processing device including:
a laser light source unit that irradiates, with a laser light, a surface of a steel sheet being conveyed in a predetermined conveyance direction;
a gas injection unit that injects a first gas in parallel with an optical axis direction of the laser light toward an irradiation site of the laser light;
a dust collection mechanism unit that is provided at either an upstream side or a downstream side of the irradiation site in the conveyance direction and that collects laser spatter generated from the irradiation site via a dust collection port; and
a gas supply unit that is disposed at an opposite side of the laser light source unit from the dust collection mechanism unit in the conveyance direction, and that supplies a second gas between the gas supply unit and the steel sheet.

Additional Aspect 2 provides the laser processing device according to Additional Aspect 1, in which
the gas supply unit is positioned at an upper side relative to the dust collection port.

Additional Aspect 3 provides the laser processing device according to Additional Aspect 1, in which
the laser light source unit, the gas injection unit, and the dust collection mechanism unit constitute each of laser processing parts, and a plurality of laser processing parts arranged along a sheet width direction of the steel sheet are provided as a laser processing set.

Additional Aspect 4 provides the laser processing device according to Additional Aspect 3, in which
a plurality of the gas supply units are provided respectively corresponding to each of the plurality of laser processing parts in the laser processing set.

Additional Aspect 5 provides the laser processing device according to Additional Aspect 3, in which
one gas supply unit is provided for all of the plurality of laser processing parts in the laser processing set.

Additional Aspect 6 provides the laser processing device according to Additional Aspect 3, in which,
in the laser processing set, the dust collection mechanism unit of a first laser processing part and the dust collection mechanism unit of a second laser processing part are provided with an interval therebetween, or the dust collection mechanism unit of the laser processing part positioned at an end portion in the sheet width direction is provided at an interval from the end portion of the steel sheet, the first laser processing part and the second laser processing part being adjacent to each other in the sheet width direction.

Additional Aspect 7 provides the laser processing device according to Additional Aspect 6, further including
a third laser processing part disposed at a position overlapping with the interval in the conveyance direction on at least one of the upstream side or the downstream side of the laser processing set in the conveyance direction.

Additional Aspect 8 provides the laser processing device according to Additional Aspect 3, further including
a ceiling plate to which the plurality of laser processing parts included in the laser processing set are attached.

Additional Aspect 9 provides the laser processing device according to Additional Aspect 1, in which
the gas supply unit is connected to a supply duct having a duct opening portion which is disposed to face the dust collection port and through which the second gas is released.

Additional Aspect 10 provides the laser processing device according to Additional Aspect 1, in which
the gas supply unit supplies the second gas in a state in which a total flow rate of the second gas is from 0.2 times to 1.5 times a total suction flow rate of the dust collection mechanism unit.

Additional Aspect 11 provides the laser processing device according to Additional Aspect 1, in which
the gas injection unit injects the first gas in a state in which a total flow rate of the first gas is from 0.1 times to 0.2 times a total suction flow rate of the dust collection mechanism unit.

According to the additional aspects, the dust collection efficiency of laser spatter can be improved, and the adhesion of laser spatter can be prevented in the sheet width direction.

The disclosure of Japanese Patent Application No. 2022-072687 filed on April 26, 2022 is incorporated herein by reference in its entirety.

All of the literature, patent applications, and technical standards described in this specification are incorporated herein by reference to the same extent that individual literature, patent applications, and technical standards were specifically and individually indicated to be incorporated by reference.

- 1, 1A to 1F, 1Z1 to 1Z7: Laser processing device
- 10: Laser light source unit
- 12: Emission portion
- 20: Gas injection unit (air nozzle)
- 20A: First gas
- 30: Dust collection mechanism unit
- 30A: Dust collection port
- 60: Air knife
- 60A: Discharge jet
- 70: Laser processing part
- 71: Gap
- 72: Gap
- 80: Gas supply unit
- 80A: Second gas
- 82: Supply duct
- 90: Ceiling plate
- 100: Laser processing set
- 100A: First laser processing set
- 100B: Second laser processing set
- A: Stagnation region
- C: Conveyance direction
- DF: Suction airflow
- G: Groove
- LB: Laser light
- LS: Laser spatter
- P: Suction pump
- R: Conveyance roll
- S: Steel sheet
- SA: Irradiation site
- WA: Maximum groove width
- WB: Opening width of dust collection port
- WS: Plate width of steel sheet
- θ: Intersection angle

## Claims

1. A laser processing device comprising:
a laser light source unit that irradiates, with a laser light, a surface of a steel sheet being conveyed in a predetermined conveyance direction;
a gas injection unit that injects a first gas in parallel with an optical axis direction of the laser light toward an irradiation site of the laser light;
a dust collection mechanism unit that is provided at either an upstream side or a downstream side of the irradiation site in the conveyance direction and that collects laser spatter generated from the irradiation site via a dust collection port; and
a gas supply unit that is disposed at an opposite side of the laser light source unit from the dust collection mechanism unit in the conveyance direction, and that supplies a second gas between the gas supply unit and the steel sheet.

2. The laser processing device according to claim 1, wherein
the gas supply unit is positioned at an upper side relative to the dust collection port.

3. The laser processing device according to claim 1 or 2, comprising a plurality of laser processing parts arranged along a sheet width direction of the steel sheet as a laser processing set, wherein each of the laser processing parts includes the laser light source unit, the gas injection unit, and the dust collection mechanism unit.

4. The laser processing device according to claim 3, wherein
a plurality of the gas supply units are provided respectively corresponding to each of the plurality of laser processing parts in the laser processing set.

5. The laser processing device according to claim 3, wherein
one gas supply unit is provided for all of the plurality of laser processing parts in the laser processing set.

6. The laser processing device according to any one of claims 3 to 5, wherein,
in the laser processing set, the dust collection mechanism unit of a first laser processing part and the dust collection mechanism unit of a second laser processing part are provided with an interval therebetween, or the dust collection mechanism unit of the laser processing part positioned at an end portion in the sheet width direction is provided at an interval from the end portion of the steel sheet, the first laser processing part and the second laser processing part being adjacent to each other in the sheet width direction.

7. The laser processing device according to claim 6, further comprising
a third laser processing part disposed at a position overlapping with the interval in the conveyance direction on at least one of the upstream side or the downstream side of the laser processing set in the conveyance direction.

8. The laser processing device according to any one of claims 3 to 7, further comprising
a ceiling plate to which the plurality of laser processing parts included in the laser processing set are attached.

9. The laser processing device according to any one of claims 1 to 8, wherein
the gas supply unit is connected to a supply duct having a duct opening portion which is disposed to face the dust collection port and through which the second gas is released.

10. The laser processing device according to any one of claims 1 to 9, wherein
the gas supply unit supplies the second gas in a state in which a total flow rate of the second gas is from 0.2 times to 1.5 times a total suction flow rate of the dust collection mechanism unit.

11. The laser processing device according to any one of claims 1 to 10, wherein
the gas injection unit injects the first gas in a state in which a total flow rate of the first gas is from 0.1 times to 0.2 times a total suction flow rate of the dust collection mechanism unit.

12. A laser processing method comprising:
irradiating, with a laser light, a surface of a steel sheet being conveyed in a predetermined conveyance direction, using a laser light source unit;
stirring up, from the surface of the steel sheet, laser spatter generated from an irradiation site by injecting a first gas in parallel with an optical axis direction of the laser light toward the irradiation site of the laser light, using a gas injection unit;
collecting the laser spatter via a dust collection port of a dust collection mechanism unit provided at either an upstream side or a downstream side of the irradiation site in the conveyance direction; and
boosting a suction flow of the laser spatter toward the dust collection port by supplying a second gas between a gas supply unit and the steel sheet using the gas supply unit disposed at an opposite side of the laser light source unit from the dust collection mechanism unit in the conveyance direction.

13. The laser processing method according to claim 12, comprising irradiating the surface of the steel sheet with the laser light using a laser processing device comprising a plurality of laser processing parts arranged along a sheet width direction of the steel sheet as a laser processing set, wherein each of the laser processing parts includes the laser light source unit, the gas injection unit, and the dust collection mechanism unit.

14. The laser processing method according to claim 13, wherein
the surface of the steel sheet is irradiated with the laser light in a state in which, in the laser processing set, the dust collection mechanism unit of a first laser processing part and the dust collection mechanism unit of a second laser processing part are provided with an interval therebetween, or the dust collection mechanism unit of the laser processing part positioned at an end portion in the sheet width direction is provided at an interval from the end portion of the steel sheet, the first laser processing part and the second laser processing part being adjacent to each other in the sheet width direction.
